# EUROPEAN PATENT APPLICATION

(11) **EP 1 090 738 A1**
(43) Date of publication of application: **11.04.2001**
(21) Application number: 97947933.4
(22) Date of filing: 12.12.1997
(51) Int. Cl.: B29C 70/20

(54) **APPARATUS AND METHOD FOR MOLDING FIBER REINFORCED RESIN MOLDINGS**

(71) Applicant: SEKISUI CHEMICAL CO., LTD., Osaka-shi, Osaka 530 (JP)
(72) Inventor: ONO, Takayuki, Sekisui Chemical Co., Ltd., Kyoto-shi, Kyoto 601 (JP); NONAKA, Toshihide, Sekisui Chemical Co., Ltd., Kurita-gun, Siga 520-30 (JP)
(74) Representative: Senior, Alan Murray
(86) International application number: JP9704602
(87) International publication number: WO9930895

(57) **Abstract**

To provide a forming equipment for fiber-reinforced plastics products which can wind roving fibers, etc. around the core die at a suitable angle without causing cut of the roving fibers or generating fluff and to provide a forming method for fiber-reinforced plastics products which is easy to evade interference of the guide with the branch pipe and capable of winding the winding material to a desired position. In the forming equipment of fiber-reinforced plastics products of the present invention comprising a rotating equipment for rotating a core die, a moving equipment provided with a guide for traveling in the vicinity of the core die and guiding a fiber, a resin impregnating bath for impregnating the fiber continuously in a liquid resin, and a fiber feeder for supplying the fiber pulled out from the resin impregnating bath to the guide, the forming equipment of fiber-reinforced plastics products winding the fiber supplied to the guide around the core die, the moving equipment is provided with two or more guides, of which only the guide closest to the core die is fixed and the other guide or guides are rotatably mounted to the moving equipment. In the forming method of fiber-reinforced plastics products comprising the step of winding a linear or strip-form winding material around a core die via a guide equipped to a moving equipment moving in the vicinity of the core die, with the core die rotated, the winding material is wound under such a condition that the guide is positioned on a plane perpendicular to the center axis of the core die.

## Description

### FIELD OF THE INVENTION

The present invention relates to a forming equipment for forming fiber-reinforced plastics products to be used for winding materials such as roving fibers, etc. around the die such as a mandrel, etc., and more specifically to a forming equipment and forming method used for manufacturing piping materials such as straight pipes, tees, tees having bend portions, elbows, bends, etc.

### DESCRIPTION OF THE PRIOR ART

The fiber-reinforced plastics products (hereinafter called the "FRP products") such as fiber-reinforced plastics pipes, etc. are extensively used for piping materials because of their light weight, high rigidity, and capability to transport high-pressure fluid. The fiber-reinforced plastics pipe used for this piping materials are connected by tees made of same fiber-reinforced plastics.

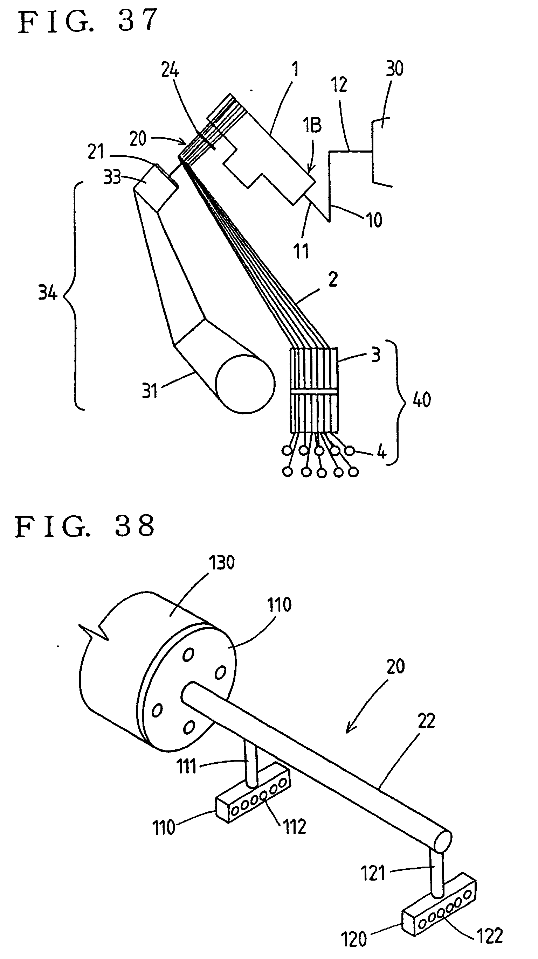

The fiber-reinforced plastics tees are manufactured by a filament winding method disclosed by the applicant of the present invention in JP. Pat. Appln. No. Hei 7-33649 in which a strip-form roving fiber is wound around a T-letter form core die (mandrel). For FRP pipes and FRP tees, as shown in FIG. 37 and FIG. 38, a manufacturing equipment comprising a rotating equipment 30, a fiber feeder 40, and a moving equipment (arm) 31 is used.

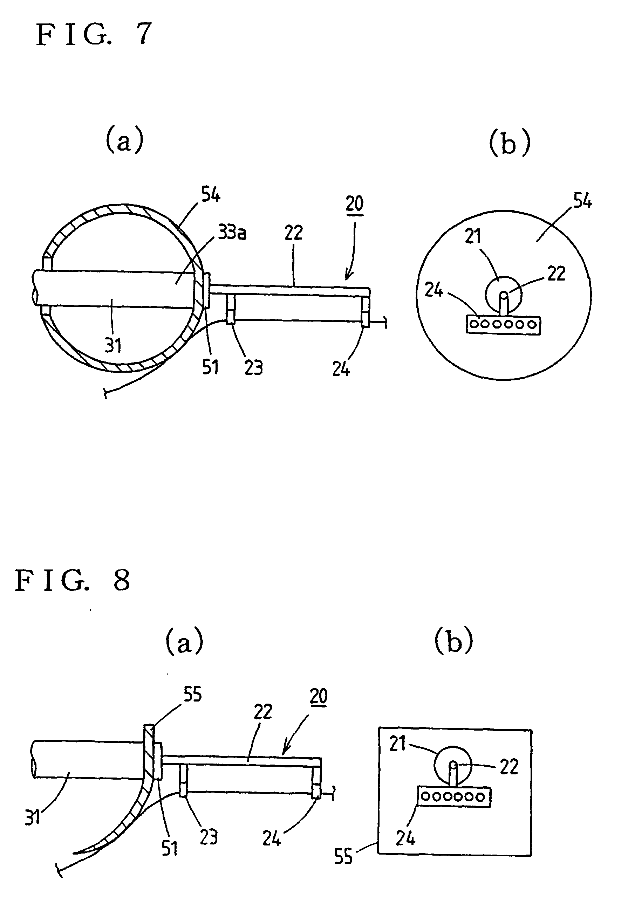

The rotating equipment 30 is equipped with a rotating shaft 10 for holding the core die 1, and the rotating shaft 10 has the top end side 11 bent in a V-letter shape, and the free end side holds the main pipe forming portion 1B on the base end side of the core die 1 in the cantilever condition. The rotating equipment 30 is designed to rotate the rotating shaft 10, with rotating the cylindrical core die 1 in the circumferential direction or holding a T-letter form core die 1 as tilted nearly 45° with respect to the center shaft 12 of the rotating shaft 10, thereby to change the direction of the core die 1 such that it draws a figure 8. To this kind of core die 1, roving fibers 2 aligned in a strip form are wound.

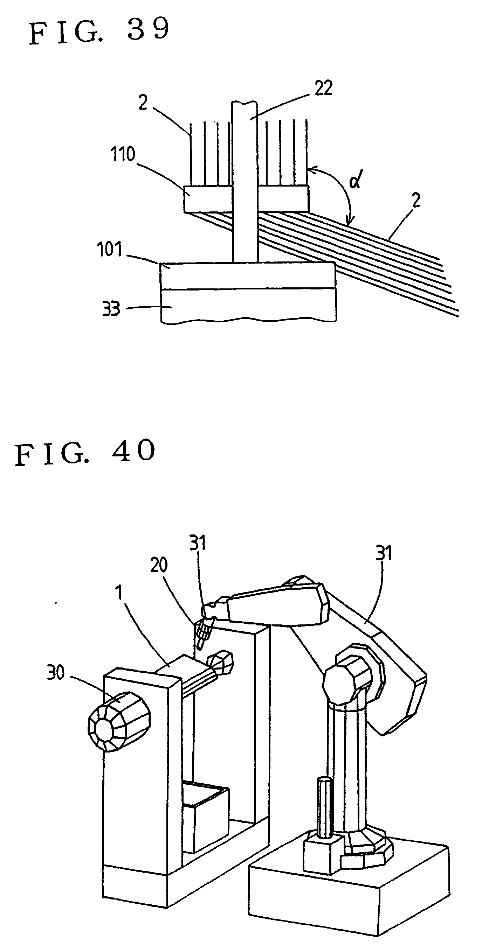

To the forming equipment, guides 110, 120 are fixed via a feed eye 20 as shown in FIG. 39. This feed eye 20 arranges the strip-form roving fibers 2 in a strip form, and moves in the vicinity of the core die 1. The feed eye 20 is mounted to the base 130 at the tip end of the robot arm 31, and to the fixing flange 101 mounted to this base 130, an arm 22 is equipped, and to the base end side and the tip end portion of the arm 22, guides 110, 120 are equipped in parallel to each other, respectively. Both guides 110, 120 are formed in a T-letter shape (inverted T-letter shape in the drawing) with longitudinal rods 111, 121 and lateral rods 112, 122, and to the lateral rods 112, 122, a plurality of holes are formed to enable the roving fibers 2 to be spread out and laid without entangling. These two guides 110, 120 are fixed integrally to the arm 22, respectively, and the guides 110, 120 move integrally with the robot arm 31 with maintaining their the parallel positional relation.

For this moving equipment 34, an industrial robot is used, which has two to six degrees of freedom and is able to move the feed eye 20 to an optimum position.

For the forming equipment, an articulated robot linked with many robot arms 31 is used, which can change directions to achieve an optional attitude. To the tip end of the robot arm 31, an feed eye 20 is equipped and the robot arm 31 moves in such a manner that the roving fiber 2 guided out from the guides 110, 120 is wound around the core die 1.

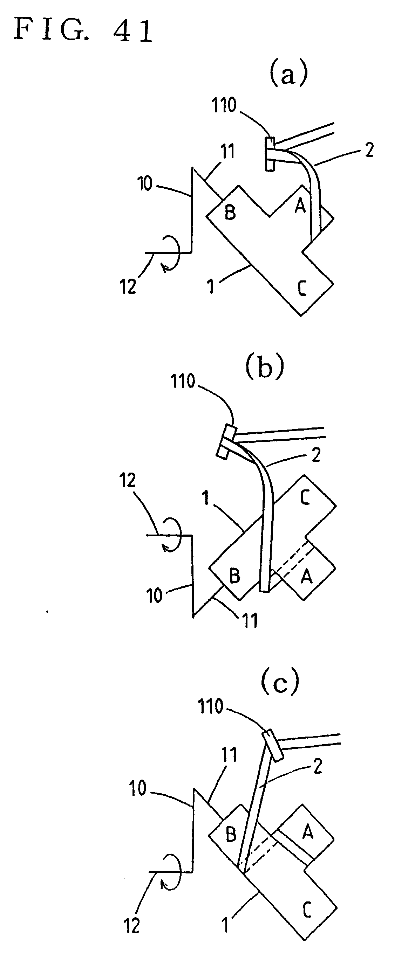

For the forming equipment of FRP products, a model recited in TECHNICAL PAPER, EM90-662, Society of Manufacturing Engineers as shown in FIG. 41 is used. The forming equipment of FRP products has many advantages such as a high degree of freedom, capability to handle complicated shapes, light weight, high-speed operation, as well as applicability to other works such as mounting and removal of the core die 1 to the rotating equipment 30, and low cost.

The fiber feeder 40 is equipped with a fiber roll 41, a resin impregnating bath 3 for impregnating the roving fiber 2 pulled out from the fiber roll 41 in a thermosetting resin solution, and a slack removing rod 43 for applying tension to the roving fiber 2 guided out to the resin impregnating bath 3. The roving fiber 2 is first impregnated in the thermosetting resin solution stored in the resin impregnating bath 3 installed in a specified place, then hitched by the guide 110, arranged in parallel strips and stretched by the guide 120, and wound around the core die 1.

The roving fiber 2 has first the tip end portion fixed to the branch pipe forming portion A of the core die 1 as shown in FIG. 41(a). Then, as shown in FIG. 41(b), the rotating shaft 10 is rotated to rotate the core die 1 so that the roving fiber 2 is wound around the branch pipe forming portion A of the core die 1. When the core die 1 continues to rotate in this manner until winding of the roving fiber 2 around the branch pipe forming portion A is finished, as shown in FIG. 41(c), the roving fiber 2 is wound around the main pipe forming portion B on the base end side of the core die 1.

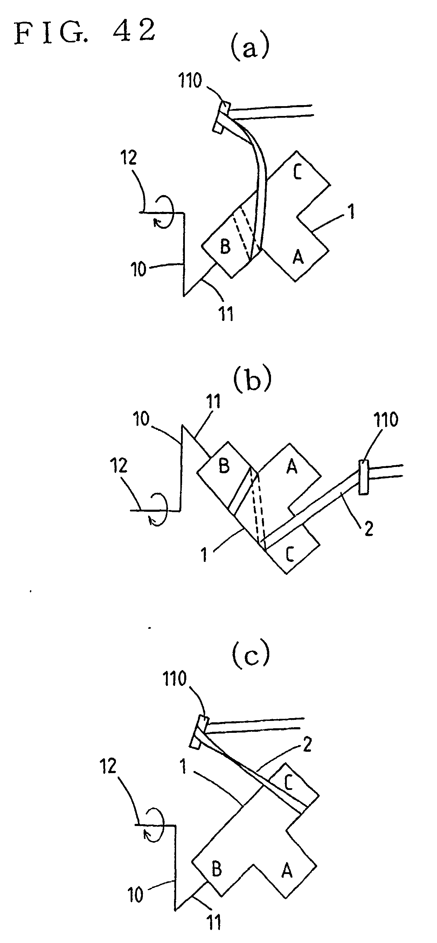

Then, the roving fiber 2 is wound around the main pipe forming portion B on the base end side of the core die 1 which rotates by the rotation of the rotating shaft 10 as shown in FIG. 42 (a). Then, as shown in FIG. 42(b), the roving fiber 2 moves to the main pipe forming portion C on the free end side of the core die 1. Lastly, as shown in FIG. 42(c), as soon as the roving fiber 2 is wound around the main pipe forming portion C on the free end side of the core die 1 which rotates by the rotation of the rotating shaft 10, the roving fiber 2 is cut. In a series of process, the feed eye 20 moves in the vicinity of the core die 1 by the moving equipment 34, which is an industrial robot. After the roving fiber 2 is wound on the branch pipe forming portion A and main pipe forming portions B, C of the core die 1 in this way and further the roving fiber 2 is cut, it is placed in a heating furnace to cure the thermosetting resin solution impregnated in the roving fiber 2. After the thermosetting resin solution is cured, the core die 1 is pulled out to complete a fiber-reinforced plastics tee.

The roving fiber 2 is arranged in parallel strips by guides 110, 120 of the feed eye 20 and wound around the core die 1. In order to wind this roving fiber 2 in a desired condition, that is, to make right angles with the core die 1, it is desirable to direct the arm 22 of the feed eye 20 mounted with guides 110, 120 in such a manner as to be constantly oriented at right angles with respect to the wound portion of the core die 1.

However, on the other hand, in order to manufacture tees, the core die 1 must have a branch pipe forming portion A, and the feed eye 20 must be moved in such a manner as to prevent the roving fiber 2 from entangling in the branch pipe forming portion A. Furthermore, since the core die 1 makes a whirling-rotation, the feed eye 22 must make complicated motion in order to orient the arm 22 of the feed eye 20 constantly at right angles to the wound portion of the core die 1. However, if the feed eye 22 moves complicatedly to be oriented at right angles to the core die 1, the angle α at which the roving fiber 2 is bent at the portion of the guide 110 must become sharp as shown in FIG. 39 because the guides 110, 120 of the feed eye 22 are fixed on the arm 22 and also because the roving fiber 2 is stretched between the resin impregnating bath 3 installed to a specified place and the guide 110. In this event, trouble occurs in discharging the roving fiber 2, and excessive load is exerted to the roving fiber 2, causing problems in that the roving fiber 2 is cut or generates fluff. Accordingly, the first object of this invention is to provide a forming equipment of fiber-reinforced plastics products which can wind the roving fiber at a suitable angle with respect to the core die without generating cuts or fluff in the roving fibers, etc.

The roving fiber 2 is guided out from the resin impregnating bath 3 of the fiber feeder 40 and hitched on the guide 110 on the base end side of the feed eye 20. And the robot arm 31 moves so that the roving fiber 2 is able to be wound around the core die 1 under a specified condition. Consequently, depending on the direction of the arm 22 of the forming equipment, the roving fiber 2 may be chafed by the tip end portion of the arm 22. In particular, when the core die 1 is in the T-letter shape, the arm 22 of the forming equipment must be directed or moved in various directions, generating the condition in which the roving fiber 2 is likely to be chafed with the tip end portion of the robot arm 31, etc. Under these circumstances, the roving fiber 2 is caught in the tip end portion and fluff is generated, and if FRP products are manufactured from the roving fiber 2 with fluff generated in this way, a problem of degraded quality occurs. In addition, a trouble in which fluff collects in the guide 110 and the roving fiber 2 is unable to be pulled out from the fiber feeder 40 may occur. Accordingly, it is the second object of this invention to provide a forming equipment of fiber-reinforced plastics products in which the roving fiber is not chafed with the tip end portion of the arm and is not caught in.

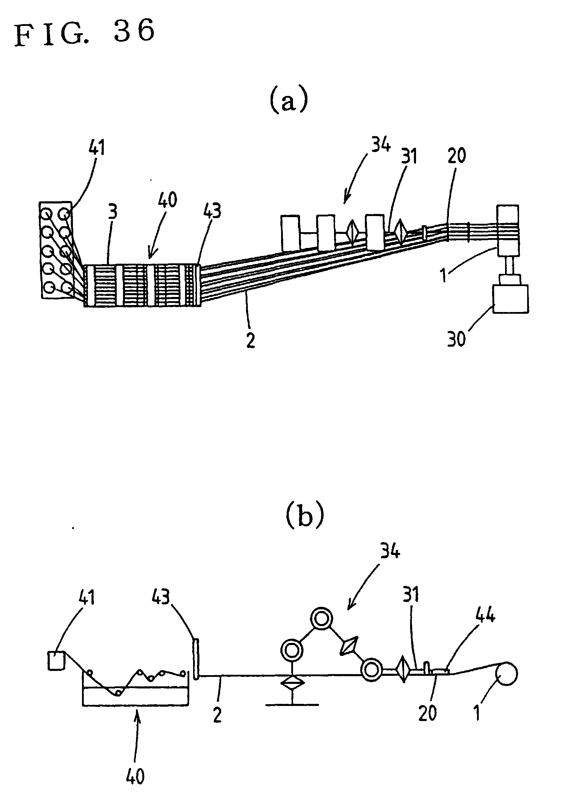

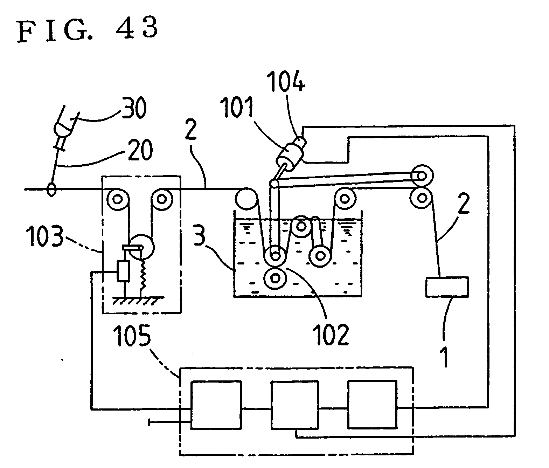

In the forming equipment, as shown in FIG. 36, the long fibers 2 pulled out from the resin impregnating bath 3 in which one or several pieces of long fibers 2 pulled out from one or several pieces of long fiber rolls 41 (long fiber can be smoothly released by pulling the end portion) are continuously impregnated in the liquid-form resin are wound around, for example, a T-letter form core die 1, but operation of this core die 1, articulated arm 31 of the robot of the forming equipment, and feed eye 20 becomes complicated. Consequently, temporary slack or large tension is generated in the long fiber 2, causing a problem in that it is unable to hang on the pin at the end portion of the core die 1. To solve this problem, a forming equipment designed to constantly apply a specified tension to the long fiber 2 was disclosed in Japanese Non-Examined Patent Publication No. Sho 63-30234. As shown in FIG. 43, this equipment comprises a pair of rollers 102 sending the long fiber 2, driven by a servo motor 101 forcibly and sunk in a resin impregnating bath 42, a tension measuring device 103 for measuring tension applied to the long fiber 2 arranged on the exit side of the resin impregnating bath 42, a speed detector 104 for detecting the rotation speed of the servo motor 101 connected to the servo motor 101, and a controller 105 for controlling the rotation speed of the servo motor 101 based on the signals from the tension measuring device 103 and the speed detector 104. According to this forming equipment, since the tension measuring device 103 directly measures tension generated in the long fiber 2 and the controller 105 controls the rotating speed of a pair of rollers 102, the long fiber 2 is wound around the core die 1 with an ideal tension. In addition, since the rotating speed of the servo motor 101, a means for driving a pair of rollers 102, is fed back by the controller 105, the controllability is improved and the equipment reliability is improved. The forming equipment according to this conventional technique has a desirable construction in terms of providing proper tension to the long fiber 2, but as described above, since it is equipped with the servo motor 101, tension measuring device 103, speed detector 104 and controller 105 to control the rotating speed of a pair of rollers 102, the construction of the forming equipment becomes complicated, requiring labor and time for maintenance, and has a problem of increasing the product cost as a result. The forming equipment of this conventional technique frequently carries out forming without any particular quality problem unless slack is generated in the long fiber. For another problem of this conventional technique, no tension is provided for the long fiber 2 entering the resin impregnating bath 3. Consequently, when the robot of the forming equipment makes abrupt action, the long fiber 2 is pulled out vigorously, causing a problem of entangling in the resin impregnating bath 3 or at the exit portion. With the above-mentioned point of view, it is the third object of this invention to provide a forming equipment of fiber-reinforced plastics products which removes slack of the long fiber by simple facilities, can form high quality products, provide proper tension to the long fiber entering the resin impregnating bath, and can carry out smooth forming operation.

The conventional forming method of fiber-reinforced plastics products as described using FIG. 36 and FIG. 37, for example for forming a T-letter form pipe joint, comprises the steps of rotating the T-letter form core die composed with the main pipe and the branch pipe in the desired direction, allowing the guide moving isolated from the core die to guide linear or strip-form winding material impregnated with resin, and winding the winding material around an optional position of the core die. In the FW method, there is a case where the winding material not impregnated with resin is wound around the core die.

Now, in the core die composed of a main pipe and a branch pipe, since the winding material is wound around the main pipe, the guide interferes (collides) with the branch pipe when the guide moves close to the main pipe. Therefore, a forming method that can wind the winding material around the main pipe in such a manner as to prevent interference between the guide and the branch pipe is disclosed in the Japanese Non-Examined Patent Publication No. Hei 1-200939. This method sets a shaft core that rotates and swings around the axis of the main pipe within the reference plane, and the guide member is moved on the cylindrical surface which is centered on the shaft core. According to this method, when the core die simply rotates and swings, and the guide member for guiding the winding material moves in a one-dimensional direction, the winding material is wound around the main pipe and the branch pipe, and the T-letter form pipe joint is formed. In this method, in order to prevent interference between the guide and the branch pipe, the guide member moves apart from the core die. Consequently, according to this method, the position of the winding material actually wound on the core die dislocates from the position of the guide member which guides the winding material, and it is difficult to determine the target position of the winding material (contact between the core die surface and the winding material). In order to wind the winding material around the whole core die, the travel distance of the guide member becomes considerably longer as compared to the full length of the core die. In the FW method, the winding material must be engaged on the pin and folded down at the end of the core die, but with the conventional technique, it is difficult to fix the target position of the winding material as described above, and the winding material sometimes failed to be engaged on the pin.

Therefore, it is the fourth object of this invention to provide a forming method of fiber-reinforced plastics products, which is able to move the guide member close to the core die and easy to avoid interference of the guide member with the branch pipe in order to wind the winding material at the desired position.

### SUMMARY OF THE INVENTION

In order to achieve the first object, the forming equipment of fiber-reinforced plastics products according to this invention comprises a rotating equipment for rotating a core die, a moving equipment provided with a guide for traveling in the vicinity of the core die and guiding a fiber, a resin impregnating bath for impregnating the fiber continuously in a liquid resin, and a fiber feeder for supplying the fiber pulled out from the resin impregnating bath to the guide, the forming equipment of fiber-reinforced plastics products winding the fiber supplied to the guide around the core die, wherein the moving equipment is provided with two or more guides, of which only the guide closest to the core die is fixed and the other guide or guides are rotatably mounted to the moving equipment.

With this configuration, since the guide provided on a moving equipment is designed to be rotatable, this guide can freely change its orientation to a direction in which tension is applied to the fiber. Consequently, the angle at which the fiber is bent at this portion of the guide can be made gentle, and the tension applied to the fiber can be reduced.

The forming equipment according to this invention may be configured to allow the guide located closest to the fiber feeder to be rotatably mounted to the moving equipment with two or more degrees of freedom.

In this event, the fiber is bent most strongly around the guide located closest to the fiber feeder, but since the guide located closest to the fiber feeder is installed rotatably with two or more degrees of freedom with respect to the moving equipment, a load applied to the fiber is markedly alleviated.

In order to achieve the second object, the forming equipment of the fiber-reinforced plastics products according to this invention may be configured to fix the guide to an arm which is located in the vicinity of the core die and at least movable in the axial direction of the core die, and at the same time, to install a cover for covering the top end of the arm between the arm and the guide.

With this configuration, since the angular arm top end portion is covered with a cover, the winding material is no longer chafed by the top end portion, and generation of fluff can be suppressed in the winding material.

The shape of the cover is desirable to be semi-spherical. Equipping a cover with this kind of shape brings the winding material in the condition to slide on a curved surface, and the winding material will be free of hitching. Even if the arm is operated to make complicated action so as to tilt the guide or to turn the guide upside down, it is possible to prevent contact of the winding material with the arm.

In addition, to achieve the third object, the forming equipment of fiber-reinforced plastics products according to this invention comprises a rotating equipment for rotating a core die, a moving equipment provided with a guide for traveling in the vicinity of the core die and guiding a fiber, a resin impregnating bath for impregnating the fiber continuously in a liquid resin, and a fiber feeder for supplying the fiber pulled out from the resin impregnating bath to the guide, the forming equipment of fiber-reinforced plastics products winding the fiber supplied to the guide around the core die, wherein a slider being formed with a through-hole and vertically movable is installed between the resin impregnating bath and the guide, and the fiber pulled out from the resin impregnating bath is biased downward by the gravity of the slider with the fiber passing through the through-hole.

With this configuration, when the fiber tension is small, the slider lowers, and when the fiber tension is strong, the slider rises and no slack is generated in the fiber.

In this configuration, the through-hole may be an elongated hole which extends in the horizontal direction. With this configuration, slack of a strip-form or a large number of linear fibers can be removed altogether.

Further in this configuration, a plurality of sliders may be mounted between the resin impregnating bath and the guide, and at the same time a piece of fiber may be passed through the through-hole of each slider. This configuration is not only capable of removing slack of each fiber but also capable of providing suitable tension to each fiber.

In the above configuration to achieve the third invention, it is desirable to have a configuration in which shafts for applying tension to the fiber are equipped on the fiber introducing side of the resin impregnating bath.

A forming equipment of fiber-reinforced plastics products also may comprise a rotating equipment for rotating a core die, a moving equipment provided with a guide for traveling in the vicinity of the core die and at the same time guiding a fiber, a resin impregnating bath for impregnating the fiber continuously in a liquid resin, and a fiber feeder for supplying the fiber pulled out from the resin impregnating bath to the guide, the forming equipment of fiber-reinforced plastics products winding the fiber supplied to the guide around the core die, wherein shafts for applying tension to the relevant fiber are equipped on the fiber introducing side of the resin impregnating bath.

According to these configurations, the fiber is impregnated in the resin impregnating bath, with the fiber pulled by the shaft and applied constantly with a specified tension.

In addition, in order to achieve the fourth object, the forming method of fiber-reinforced plastics products according to this invention comprises the step of winding a linear or strip-form winding material around a core die via a guide equipped to a moving equipment moving in the vicinity of the core die, with the core die rotated, wherein the winding material is wound under such a condition that the guide is positioned on a plane perpendicular to the center axis of the core die.

According to this configuration, the guide is located on a plane perpendicular to the center axis of the core die. That is, the guide is located in a vertical position to the rotation axis of the core die or in a vertical position in the offset relation. Now, since the core die rotates around the rotation axis, the plane vertical to the center axis of the core die may be the position where the overlapping volume is the smallest with respect to the rotation locus of the core die. Consequently, only by slightly shifting the guide, collision between the guide and the branch pipe can be avoided.

In addition to this configuration, it is desirable to arrange the axial center of the guide to be directed to the center of the core die. Now, the axial center of the guide means a line of the winding roll within a range where the winding roll is engaged with the guide. However, if the guide has an arm, there is a case that the arm may be directed to the center with the arm assumed to be the axial center of the guide.

The invention of the former configuration only considers the ease of evasion to the axial direction of the core die, while the invention of the latter configuration additionally considers the ease of evasion in the rotating angle direction. That is, since the branch pipe comes in contact with the guide by making rotational action, the narrower the angle region to collide is, the easier it is to evade the guide. In the invention of the latter configuration, since the axial center is directed in the guide center, the angle overlapping the rotation region of the branch pipe is extremely small.

In addition, it is desirable that the axial center of the guide be horizontal in the forming method according to this invention. A resin impregnating bath for impregnating resin into the winding material may be equipped to the guide, and the winding material coming out from the resin impregnating bath may be wound around the core die via the guide.

This configuration is added with a capability to prevent bend when the winding material is supplied. Since the resin impregnating bath and the guide are equipped to the moving equipment, the change in the relative position between the resin impregnating bath and the guide is extremely small even if the moving equipment moves to any position. Consequently, the fiber does not bend even if the moving equipment moves. It is desirable to use the invention of the latter configuration together with that of the former. That is, because the axial center of the guide is horizontal, the resin solution in the resin impregnating bath does not spill out.

In addition, for a configuration to achieve the similar object, in a forming method of fiber-reinforced plastics products comprising the step of winding a linear or strip-form winding material around a core die via a guide, with the core die rotated, wherein a target position which is a contact between the core die surface and the winding material is positioned where a straight line connecting the target position which lies in a plane including the target position and perpendicular to the center axis of the core die, to the rotation center of the core die, is horizontal.

For the method using T-letter form object composed of pipe and a branch pipe for the core die, the following configuration, in particular, can achieve the fourth object.

That is, in a forming method of fiber-reinforced plastics products using a T-letter form object and comprising the step of winding a winding material around the T-letter form object via a guide moving in the vicinity of the T-letter form object, with the T-letter form object rotated, if it is forecasted that the branch pipe of the T-letter form object may interfere with the guide when the T-letter form object continues to rotate and the guide continues to travel, a wait operation in which the guide is not allowed to advance and the T-letter form object is held rotated, or an advancing operation in which the rotation of the T-letter form object is stopped and the guide is allowed to advance is selectively carried out, and thereafter, when the branch pipe no longer interferes with the guide, an advancing operation of the guide or a rotating operation of the T-letter form object is carried out.

According to this configuration, when it is forecasted that the branch pipe of the T-letter form object may interfere with the guide if the T-letter form object is held rotated and the guide continues to travel, the wait operation or advancing operation takes place, whereby it is possible to prevent the branch pipe from interfering with the guide. In addition, the guide is allowed to move in the vicinity of the main pipe so that the winding material can be wound around the main pipe in a desired condition.

For the additional configurations, after the above wait operation, the guide may be allowed to return to a position where the guide is assumed to locate if the T-letter form object had stopped rotation and the guide had continued to advance, or, after the advancing operation, the T-letter form object may be allowed to rotate at a position where the T-letter form object is assumed to locate if the guide had stopped and the T-letter form object had continued to rotate.

According to this configuration, because the guide and the T-letter form object are designed to return to the original position after the wait operation or advancing operation, the winding material can be wound around the T-letter form object as if the guide or T-letter form object had not stopped in the wait operation or the advancing operation.

### BRIEF DESCRIPTION OF THE DRAWINGS

FIG. 1 is a schematic diagram showing a condition in which the roving fiber is wound around the core die by the forming equipment of fiber-reinforced plastics products concerning one embodiment according to this invention corresponding to claims 1 and 2;
FIG. 2 is a schematic diagram showing a condition different from FIG. 1 in which the roving fiber is wound around the core die by the forming equipment of fiber-reinforced plastics products concerning one embodiment according to this invention corresponding to claims 1 and 2;
FIG. 3 is a schematic perspective of a feed eye of a forming equipment of fiber-reinforced plastics products related to an embodiment according to this invention corresponding to claims 1 and 2;
FIG. 4 is an enlarged essential front view of the feed eye shown in FIG. 3;
FIG. 5(a) is an essential cross-sectional view including the tip end portion of the forming equipment of fiber-reinforced plastics products related to one embodiment according to this invention corresponding to claims 3 and 4, and FIG. 5(b) is a side view of the same.
FIGS. 6(a), (b) are respectively cross-sectional views of the circumferential portion of cover of the forming equipment of fiber-reinforced plastics products related to another embodiment according to this invention corresponding to claims 3 and 4.
FIG. 7(a) is an essential view in section including the tip end portion of the forming equipment of fiber-reinforced plastics products related to still another embodiment according to this invention corresponding to claims 3 and 4, and FIG. 7(b) is a side view of the same;
FIG. 8(a) is an essential view in section including the tip end portion of the forming equipment of fiber-reinforced plastics products related to yet another embodiment according to this invention corresponding to claims 3 and 4, and FIG. 8(b) is a side view of the same;
FIG. 9(a) is an essential view in section including the tip end portion of the forming equipment of fiber-reinforced plastics products related to a further embodiment according to this invention corresponding to claims 3 and 4, and FIG. 9(b) is a side view of the same;
FIG. 10 is a perspective view of the tip end portion of the forming equipment of fiber-reinforced plastics products related to further another embodiment according to this invention corresponding to claims 3 and 4;
FIG. 11 is an essential front view of the forming equipment of fiber-reinforced plastics products related to one embodiment according to this invention corresponding to claims 5 to 9;
FIG. 12 is a perspective view of shafts mounted on the inlet side of the resin impregnating bath of the forming equipment of fiber-reinforced plastics products of FIG. 11;
FIG. 13 is a perspective view of a slider composing the forming equipment of fiber-reinforced plastics products related to one embodiment;
FIG. 14 is a perspective view of a slider composing the forming equipment of fiber-reinforced plastics products related to one embodiment different from that of FIG. 13;
FIG. 15 is a structural diagram of the forming equipment used in the forming method of fiber-reinforced plastics products related to one embodiment according to this invention corresponding to claims 10 to 14;
FIG. 16 is a perspective view of a guide used in the forming method of fiber-reinforced plastics products related to one embodiment according to this invention corresponding to claims 10 to 14;
FIG. 17 is a perspective view in section of the guide shown in FIG. 16;
FIG. 18 is a perspective view showing a positional relation between the core die and the guide in the forming method of fiber-reinforced plastics products related to one embodiment according to this invention corresponding to claims 10 to 14;
FIG. 19 is an illustration for explaining the conventional art and one embodiment according to present invention, wherein FIG. 19(a) is a plan view showing a positional relation between the core die and the guide in the forming method of fiber-reinforced plastics products according to the conventional art and FIG. 19(b) is a plan view showing a positional relation between the core die and the guide in the forming method of fiber-reinforced plastics products according to the present invention;
FIG. 20 is an illustration showing a positional relation in the rotating angle direction of the core die to the guide in the forming method of fiber-reinforced plastics products related to one embodiment according to the present invention corresponding to claims 10 to 14;
FIG. 21 is an illustration showing a positional relation in the rotating angle direction of the core die to the guide in the forming method of fiber-reinforced plastics products related to another embodiment according to the present invention corresponding to claims 10 to 14;
FIG. 22 is an illustration showing a positional relation in the rotating angle direction of the core die to the guide in the forming method of fiber-reinforced plastics products related to still another embodiment according to the present invention corresponding to claims 10 to 14;
FIG. 23 shows the configuration of a forming equipment used in the forming method of fiber-reinforced plastics products related to yet another embodiment according to the present invention corresponding to claims 10 to 14, wherein FIG. 23(a) is a plan view of the same and FIG. 23(b) is a front view of the same;
FIG. 24 is an illustration showing a guide locus when the present invention is applied to form straight pipes;
FIG. 25 is an illustration showing a guide locus when the present invention is applied to form tees by rotating the core die around the main axis;
FIG. 26 is an illustration showing a guide locus when the present invention is applied to form bends;
FIG. 27 is an illustration showing a guide locus when the present invention is applied to form tees by rotating the core die tilted to the main axis and branch axis;
FIG. 28 is an illustration explaining a forming method of fiber-reinforced plastics products related to one embodiment of the present invention corresponding to claims 15 and 16 and is a front view when the guide stops and the T-letter form object continues rotating;
FIG. 29 is an illustration explaining a forming method of fiber-reinforced plastics products related to one embodiment of the present invention corresponding to claims 15 and 16 and is a front view when the T-letter form object stops rotating and the guide continues moving;
FIG. 30 is an illustration explaining a forming method of fiber-reinforced plastics products related to one embodiment of the present invention corresponding to claims 15 and 16 and is a front view showing the wait operation wherein the guide is not allowed to advance and the T-letter form object is rotated, which operation takes place when the branch pipe is predicted to interfere with the guide if the T-letter form object continues to rotate and the guide continues to advance;
FIG. 31 is an illustration explaining a forming method of fiber-reinforced plastics products related to one embodiment of the present invention corresponding to claims 15 and 16 and is a front view showing the advancing operation wherein the T-letter form object stops rotation and the guide is allowed to advance;
FIG. 32 is an illustration explaining a forming method of fiber-reinforced plastics products related to one embodiment of the present invention corresponding to claims 15 and 16 and is a front view showing the operation of advancing the guide, after the wait operation, to an expected position where it would be located if the wait operation had not been carried out;
FIG. 33 is an illustration explaining a forming method of fiber-reinforced plastics products related to one embodiment of the present invention corresponding to claims 15 and 16 and is a front view showing the operation of rotating the T-letter form object, after the advancing operation, to an expected rotation angle to which it would have rotated if the advancing operation had not been carried out;
FIG. 34 is a flow chart describing a method for winding the winding material around the T-letter form object related to an embodiment according to this invention corresponding to claims 15 and 16;
FIG. 35 is an illustration explaining a forming method of fiber-reinforced plastics products related to one embodiment of the present invention corresponding to claims 15 and 16 and is a perspective view showing the condition in which the guide is mounted to the arm;
FIG. 36 shows the configuration of a conventional forming method of fiber-reinforced plastics products, wherein FIG. 36(a) is a plan view and FIG. 36(b) a front view of the same;
FIG. 37 is a schematic representation showing the condition in which the roving fiber is wound around the core die by a forming equipment of fiber-reinforced plastics products according to a conventional art;
FIG. 38 is a schematic perspective view of the feed eye according to a conventional art;
FIG. 39 is an enlarged essential front view of the feed eye according to a conventional art;
FIG. 40 is an overall perspective view of a rotating equipment and a moving equipment of a forming equipment of fiber-reinforced plastics products according to a conventional art;
FIG. 41 is a schematic representation showing a process for manufacturing a branch pipe portion of fiber-reinforced plastics joints according to a conventional art;
FIG. 42 is a schematic representation showing a process for manufacturing a main pipe portion of fiber-reinforced plastics joints according to a conventional art; and
FIG. 43 is a system diagram of a forming equipment of fiber-reinforced plastics products according to a conventional art.

### DETAILED DESCRIPTION OF THE PREFERRED EMBODIMENTS

Referring now to attached drawings, preferred embodiments of this invention will be specifically described.

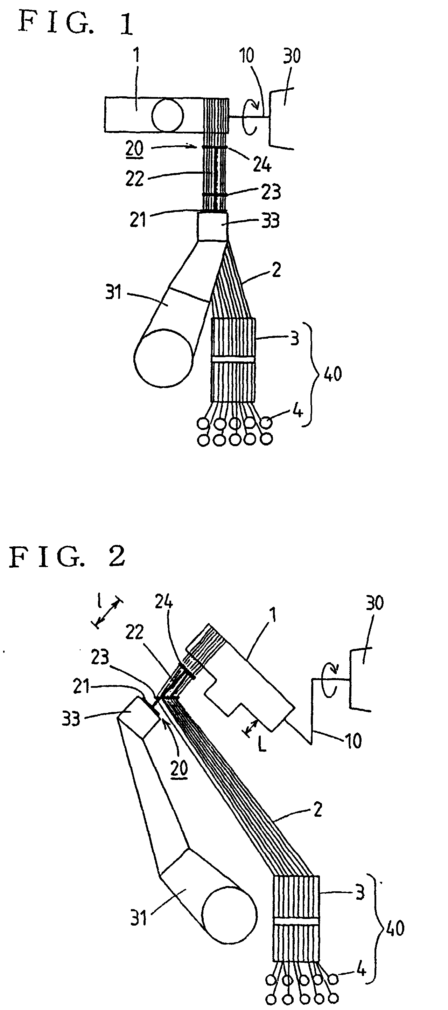

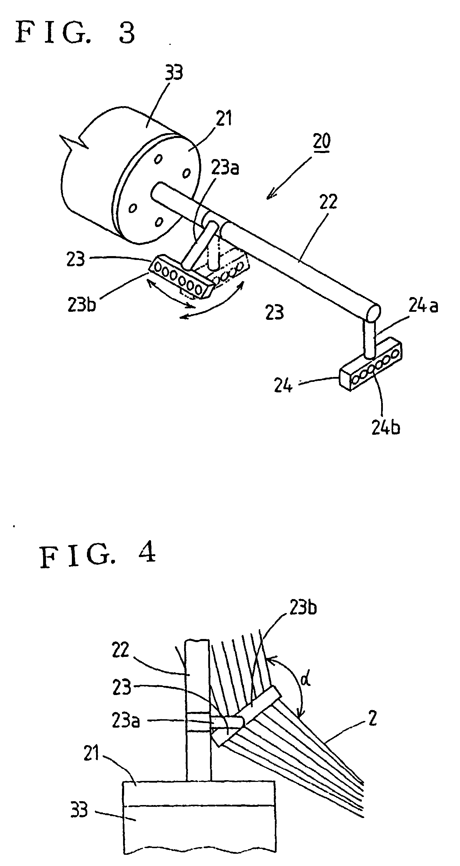

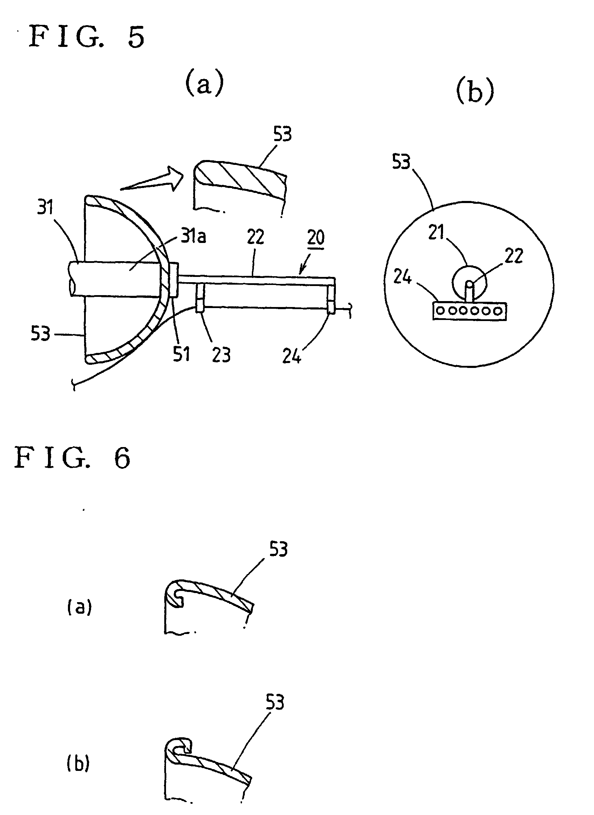

FIG. 1 through FIG. 6 describe the forming equipment of fiber-reinforced plastics products related to this invention corresponding to claims 1 and 2. FIG. 1 is a schematic diagram showing a condition in which the roving fiber is wound around the core die by the forming equipment of fiber-reinforced plastics products concerning the embodiment. FIG. 2 is a schematic diagram showing a condition different from FIG. 1. FIG. 3 is a schematic perspective of a feed eye of the forming equipment of fiber-reinforced plastics products. FIG. 4 is an enlarged essential front view of the feed eye shown in FIG. 3. FIG. 5 is a schematic diagram showing a process for manufacturing a branch pipe portion of fiber-reinforced plastics joints related to this invention corresponding to claims 1 and 2. FIG. 6 is a schematic diagram showing a process for manufacturing a main pipe portion of the fiber-reinforced plastics joints.

The forming equipment of this embodiment is a forming equipment of fiber-reinforced plastics pipes or pipe joints and is characterized by the guide 23 of the feed eye 20. In the feed eye 20, a first guide 23 and a second guide 24 of T-letter shape are mounted, in parallel relationship to each other, to the base end side and the tip end side of the arm 22 protrudably equipped to a fixing flange 21, as in the conventional case. Of these guides, the first guide 23 is rotatable. Both first guide 23 and second guide 24 comprise longitudinal rods 23a, 24a mounted to the arm 22 and lateral rods 23b, 24b to be mounted to the tip end portion of the longitudinal rods 23a, 24a, respectively, and the first guide 23 has the longitudinal rod 23a rotated around the arm 22, while the lateral rod 23b rotates around the longitudinal rod 23a. That is, the first guide 23 is mounted rotatably to the arm 22 with two degrees of freedom.

The length of the feed eye 20, specifically, the distance l from the first guide 23 to the second guide 24 is longer than the length L of the branch pipe of the core die 1, and consideration is given to prevent the branch pipe from coming in contact with the roving fiber 2 when the core die 1 is rotated.

The fixed flange 21 of this kind of feed eye 20 is fixed to a moving equipment 31, that is, an articulated robot arm. Consequently, the first guide 23 is rotatable with two degrees of freedom with respect to the moving equipment 31.

The robot arm has two to six degrees of freedom, and the arm 22 of the feed eye 20 fixed to the tip end portion of the free end shaft 33 moves in the vicinity of the core die 1 while generating a specified locus, and is able to direct the arm 22 of the feed eye 20 at right angles with respect to the winding direction of the core die 1.

Because other components such as the T-letter form core die 1 and the rotating equipment 30 for rotating the core die 1 are same as those of conventional arts, their explanation is omitted.

Next, description will be made on a method for manufacturing tees using the forming equipment according to this embodiment.

To manufacture tees, the roving fiber 2 is impregnated in the thermosetting resin liquid in the resin impregnating bath 3 installed at a specified position, and the roving fiber 2 is stretched over the first guide 23 and the lateral rod 24b of the second guide 24 of the feed eye 20. In this event, as shown in FIG. 1, the moving equipment 31 is controlled so that the arm 22 of the feed eye 20 can be oriented at right angles with respect to the winding position of the core die 1. The roving fiber 2 guided out from the second guide 24 of the feed eye 20 is wound around the core die 1 in a parallel strip form.

Because the core die 1 is held on a rotating shaft 10 bent in a V-letter shape, the core die 1 rotates in the tilted posture by the rotation of the rotating shaft 10. In this event, as shown in FIG. 2, the moving equipment 31 follows the posture of the core die 1 so that the arm 22 of the feed eye 20 can be oriented at right angles with respect to the winding position of the roving fiber 2. Since the second guide 24 of the feed eye 20 mounted to the moving equipment 31 is fixed to the arm 22, it stands face to face in parallel with the core die 1, and the roving fiber 2 guided out from the second guide 24 is wound around the core die 1 in parallel.

However, the roving fiber 2 is bent at the first guide 23 between the resin impregnating bath 3 and the second guide 24, and is applied with tension. However, since the first guide 23 freely rotates in the two axial directions with respect to the arm 22, as shown in FIG. 4, it orients itself so as to give the minimal tension to the roving fiber 2. Specifically, in this embodiment, the first guide 23 has the longitudinal rod 23a rotated around the arm 22, and therefore, the guide 23 rotates as the arm 22 moves in the vertical direction. Because the lateral rod 23b can be rotated around the longitudinal rod 23a, the guide 23 rotates as the arm 22 moves in the horizontal direction.

As a result, the angle α where the roving fiber 2 is bent at the first guide 23 portion becomes less acute than the case of the conventional art (see FIG. 40), and the load applied to the roving fiber 2 is alleviated. Consequently, the roving fiber 2 is guided out from the second guide 24 without being cut or generating fluff and is wound around the core die 1. After the roving fiber 2 is wound around the branch pipe forming portion A and main pipe forming portions B, C of the core die 1, the roving fiber 2 is cut, and the thermosetting resin solution impregnated in the roving fiber 2 is cured. Thereafter, removing the core die 1 completes a tee made of fiber-reinforced plastics.

In the above-mentioned embodiment, the first guide 23, as disclosed, rotates in two axial directions, but it may be the one rotating in three or more axial directions. The feed eye 20 described above is equipped with two guides 23, 24, but it may be the one equipped with three or more guides. When a feed eye equipped with three or more guides is employed, it is desirable to design the guide on the most base end side, in other words, close to the resin feeder, to be rotatable. It is also desirable to design the second and after guides to be rotatable, but when the second and after guides are made rotatable, it is desirable to reduce the rotatable angle of the guide or reduce the degree of freedom of the guide on the free end side by reducing the number of rotatable axes, gradually from the base end side to the free end side.

In the above-mentioned embodiment, the case where tees are manufactured is described, but the forming equipment of fiber-reinforced plastics products according to this invention can be applied to the manufacture of various fiber-reinforced plastics pipes such as elbows and crosses or fiber-reinforced plastics joints themselves.

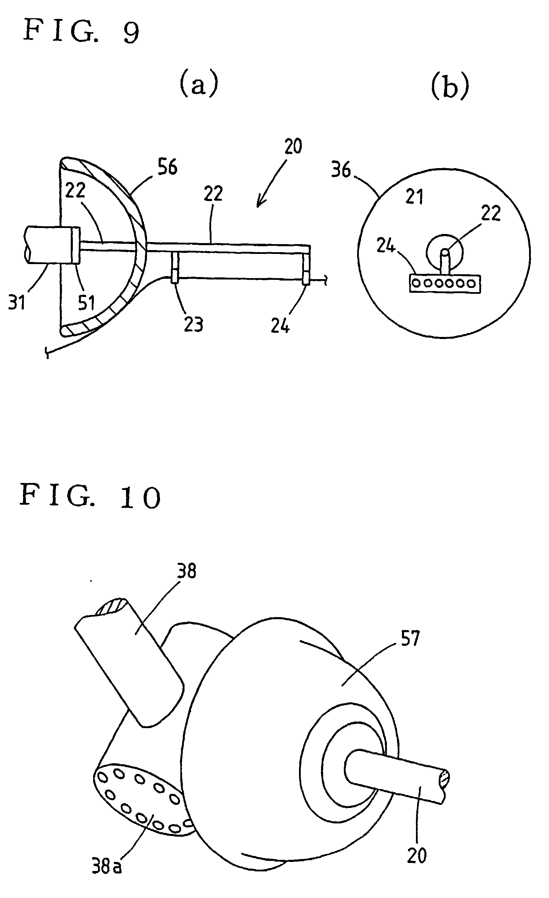

FIG. 5 through FIG. 10 are illustrations describing the forming equipment of fiber-reinforced plastics products related to this invention corresponding to claims 3 and 4. FIG. 5 (a) is an essential cross-sectional view including the tip end portion of the forming equipment of fiber-reinforced plastics products related to the embodiment, and FIG. 5 (b) is the side view of the same. FIGS. 6(a), (b) are cross-sectional views of the circumferential portion of the cover of the forming equipment of fiber-reinforced plastics products related to another embodiment. FIG. 7(a) is an essential view in section including the tip end portion of the forming equipment of fiber-reinforced plastics products related to still another embodiment, and FIG. 7(b) is a side view of the same. FIG. 8(a) is an essential view in section including the tip end portion of the forming equipment of fiber-reinforced plastics products related to yet another embodiment, and FIG. 8(b) is a side view of the same. FIG. 9(a) is an essential view in section including the tip end portion of the forming equipment of fiber-reinforced plastics products related to a further embodiment, and FIG. 9(b) is a side view of the same. FIG. 10(a) is an essential view in section including the tip end portion of the forming equipment of fiber-reinforced plastics products related to further another embodiment, and FIG. 10(b) is a side view of the same.

The forming equipment according to this embodiment is characterized by covering the tip end portion 31a of the arm 31 with a semi-spherical cover 53. This cover 53 is open to the base end side of the arm 31 and mounted with the top portion held between the tip end portion 31a of the arm 31 and the base 51 of the feed eye 20. The roving fiber 2 in a winding material is prevented from being caught in the peripheral edge portion by designing the peripheral edge portion on the opening side of the cover 53 to have a rounded form as shown in the enlarged view in FIG. 5. Consequently, when the peripheral edge portion of the cover 53 is angular, it has a construction bent to either inside or outside in the rounded form as shown in FIG. 6(a) or FIG. 6(b).

By covering the tip end portion 31a of the arm 31 with this kind of semi-spherical cover 53, the winding material such as roving fiber 2 is free of hitching even if it is chafed by the tip end portion 31a of the arm 31. That is, after the roving fiber 2 is impregnated in the thermosetting solution stored in the resin impregnating bath 3 of the fiber feeder 40, it is hitched on two guides 23, 24 of the feed eye 20 and wound around the core die 1. In this event, even if the direction of the arm 31 of the forming equipment 30 is changed to orient itself in the direction in which the roving fiber 2 crosses the core die 1 at right angles, the roving fiber 2 is only chafed as if it slid on the semi-spherical cover 53, and therefore, the roving fiber 2 is pulled out from the fiber feeder 40 without hitching. Consequently, the roving fiber can be wound around the core die 1 without generating fluff or giving rise to trouble in which the roving fiber 2 is unable to be pulled out from the fiber feeder 40.

The cover 53, as illustrated above, has a semi-spherical shape, but this embodiment shall not be limited to this shape only but the design can be changed in accord with the shape and forming conditions of the fiber-reinforced plastics products to be manufactured.

For example, the shape of the cover may be close to a sphere like the cover 54 shown in FIG. 7. The cover 54 close to a sphere as shown in FIG. 7 can cover the tip end portion 31a of the arm 31 more completely, and can be said a more desirable construction. However, since this restricts the operating range, this cover 54 is suited where changes of the robot arm 31 direction are comparatively less.

For other shapes, it may be an apron shape as shown with the cover 55 in FIG. 8. That is, the cover 55 shown in FIG. 8 has the lower half of a rectangular plate bent, and the cross-sectional shape of the lower half is fan-shaped. This cover 55 is suited where changes of the arm 31 direction are comparatively less.

For all the above-mentioned covers 53, 54, 55, constructions with the cover sandwiched between the arm 31 and feed eye 20 are shown, but the cover is only needed to be mounted between the arm 31 and the guides 23, 24, and for example, as shown in FIG. 9, it may be a construction to integrate the cover 56 with the feed eye 20. In this configuration, the cover 56 is directly fixed to the arm 22 of the feed eye 20.

For a more practical embodiment, as shown in FIG. 10, when the cover 57 is made in a semi-spherical form, the cover surrounds the circumferential rotating portion, articulation 38a, etc., and the roving fiber 2 can be prevented from being chafed by the edge of the articulation 38a, etc. and bolts. In this event, the cover 37 has the depth, profile and size decided in such a manner as to prevent interference with the bending action of the head, etc. or articulation 38a, etc.

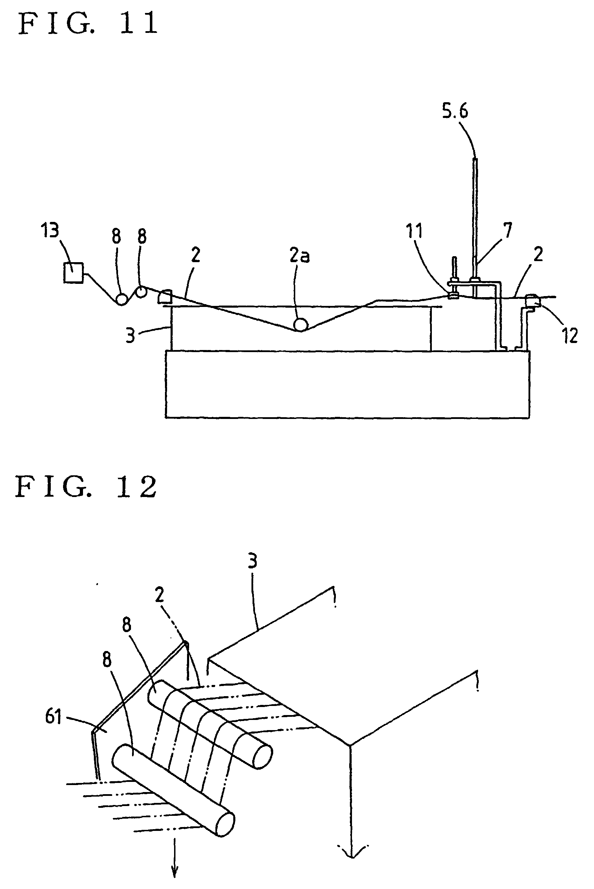

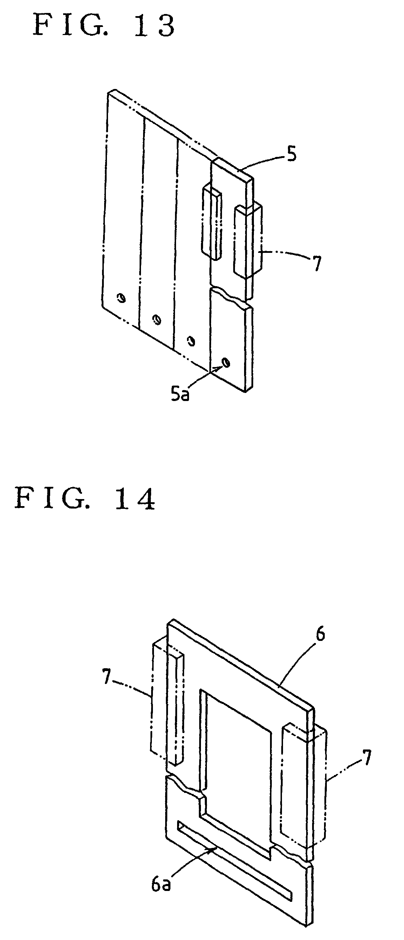

In addition, FIG. 11 through FIG. 14 illustrate the forming equipment of fiber-reinforced plastics products according to this invention corresponding to claims 5 to 9. FIG. 11 is an essential front view of the forming equipment of fiber-reinforced plastics products related to one embodiment according to this invention corresponding to claims 5 to 9. FIG. 12 is a perspective view of shafts mounted on the inlet side of the resin impregnating bath of the forming equipment of fiber-reinforced plastics products of FIG. 11. FIG. 13 is a perspective view of a slider composing the forming equipment of fiber-reinforced plastics products related to one embodiment. FIG. 14 is a perspective view of a slider composing the forming equipment of fiber-reinforced plastics products related to one embodiment different from that of FIG. 13;

The forming equipment of fiber-reinforced plastics products of this embodiment is characterized by the shafts 8 for providing tension to the long fiber 2 arranged on the inlet side of the resin impregnating bath 3 as shown in FIG. 11. The other characteristic of this embodiment is the slider 5, 6 mounted between the exit of the resin impregnating bath 3 and the guide 44 equipped to the robot of the forming equipment 30.

That is, in the forming equipment of fiber-reinforced plastics products according to this embodiment, two shafts 8 are mounted on the inlet side of the resin impregnating bath 3 in parallel at different levels as shown in FIG. 12. Each of the shafts 8 is something like a fixed rod which is fixed to a side plate 61 to prevent rotation. However, the shafts 8 may be allowed to rotate via the bearing. The long fiber 2 pulled out from the roll 13 enters the resin impregnating bath 3 via two shafts 8. The long fiber 2 enters the resin impregnating bath 3 with tension slightly given by passing a zigzag route formed with two shafts 8 as well as the frictional force of the shafts 8.

In this embodiment, as shown in FIG. 11, FIG. 13, and FIG. 14, the sliders 5, 6 which ascend and descend in accord with the tension of the long fiber 2 are arranged on the exit side of the resin impregnating bath 3, that is, between the resin impregnating bath 3 and the guide 44. The slider 5 has a construction to have a round through-hole 5a at the narrow-plate-form lower end portion as shown in FIG. 13. When the long fiber 2 is one piece, this slider 5 is mounted, the long fiber 2 is passed through this through-hole 5a, and the long fiber 2 is pressed down by the dead weight of the slider 5, and the slack is removed. However, as shown with the virtual line in FIG. 13, this may be designed to apply tension of an optimum size to each of a plurality of long, fibers 2 by arranging a plurality of sliders 5...5 in series and to remove slack.

By using a slider 6 of a great width as shown in FIG. 14, tension can be applied to a plurality of long fibers 2. This wide slider 6 has the weight reduced, and is formed in a frame shape with the inner side removed by a required weight with care to prevent excessive tension to the long fibers 2, and an elongated through-hole 6a is installed at the lower end portion to pass a plurality of long fibers 2. The slider 6 shown in FIG. 14 is suited when slack of a strip form long fiber is removed.

This kind of sliders 5, 6 ascend and descend freely in the vertical direction with both side portions held slidably. The sliders 5, 6 are installed between the two fixed guides 11, 12 mounted at the exit portion of the resin impregnating bath 3. The height of the fixed guides 11, 12 is nearly equivalent to that of the resin impregnating bath 3, and a significant distance is provided from the floor surface. The height of through-holes 5a, 6a when the sliders 5, 6 are located at the uppermost end is equivalent to that of the fixed guides 11, 12, and therefore, the sliders 5, 6 have significant degree of freedom in the vertical direction.

When the long fiber 2 leaves the resin impregnating bath 3, it is passed in the through-holes 5a, 6a of the sliders 5, 6 via the fixed guide 11, and then it is passed into the guide 44 mounted to the forming equipment 30 via the fixed guide 12. And when strong tension is applied to the long fiber 2 which passes the through-holes 5a, 6a provided at the lower end portion of the sliders 5, 6, the sliders 5, 6 rise between the fixed guides 11 and 12, and when the long fiber 2 slacks, the sliders 5, 6 lower. Consequently, slack of the long fiber 2 can be removed with the dead weight of the sliders 5, 6. The dead weight of the sliders 5, 6 can be adjusted by the length and the size of the inner portion to be removed.

In the forming equipment of fiber-reinforced plastics products according to this embodiment, the long fiber 2 is pulled out from the roll 13 and impregnated in resin at the resin impregnating bath 3 via the shaft 8, and passes through-holes 5a, 6a of the sliders 5, 6 as well as the fixed guide 12, is guided to the guide 44 equipped to the robot of the forming equipment 30, is guided out from the guide 44, and is wound around a rotating core die 1.

In the forming equipment of fiber-reinforced plastics products according to this embodiment, the long fiber 2 pulled from the roll 13 and impregnated in the resin in the resin impregnating bath 3 is provided with tension of an optimum degree, and it neither slacks nor lumps. By the sliders 5, 6 arranged on the exit side of the resin impregnating bath 3, the long fiber 2 passed through the through-holes 5a, 6a of the sliders 5, 6 is pressed downwards, and slack of the long fiber 2 discharged from the resin impregnating bath 3 is removed. Consequently, even if the guide 44 makes complicated movements, the long fiber 2 is free of slack or excessive tension generation, is guided out from the guide 44, and is wound around the core die 1.

In the above-mentioned embodiment, in order to provide tension to the long fiber 2 entering the resin impregnating bath 3, the construction in which two fixed shafts 8 are mounted before the resin impregnating bath 3 is disclosed. The reason why the fixed shafts 8 is employed for a member to provide tension in this way is that the long fiber 2 is frequently formed in a roll and is pulled out with no tension applied as described above.

In actuality, to achieve the above-mentioned capabilities, it is necessary to properly determine the degree of the friction in the passage of the long fiber, as well as the weight and the ascending and descending range of the slider. One example is given as an embodiment. Let the frictional force on the resin impregnating bath side with respect to the slider be about 0.6 kgf, the frictional force on the long fiber feeding side be about 0.2 kgf, the weight of the slider be about 200 gf, and the ascending and descending range of the slider be about 800 mm, it has been confirmed that the slack is successfully removed.

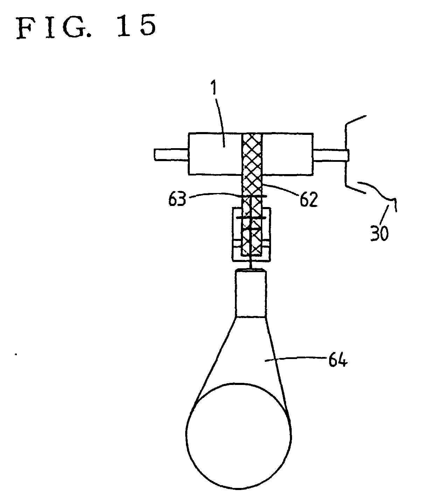

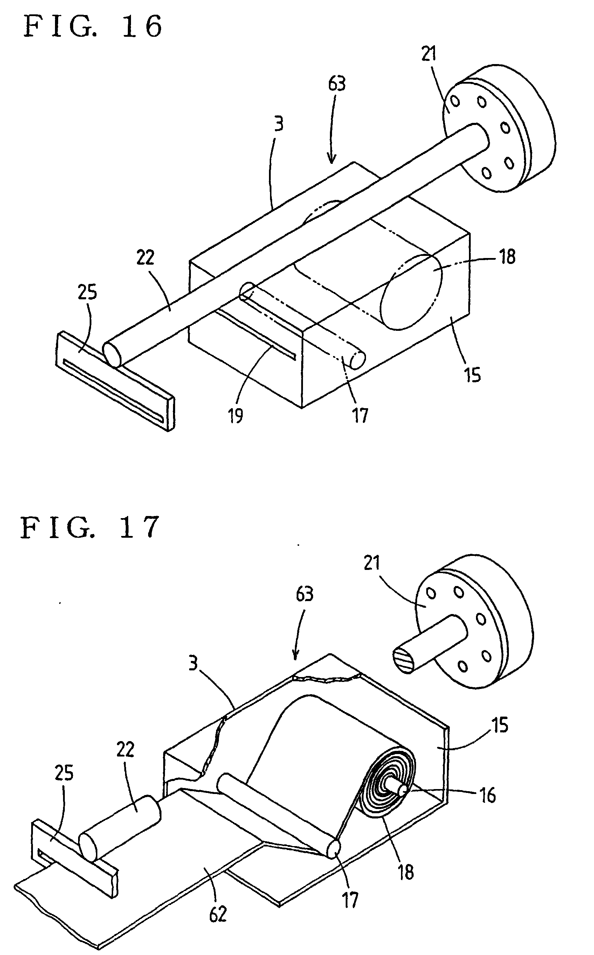

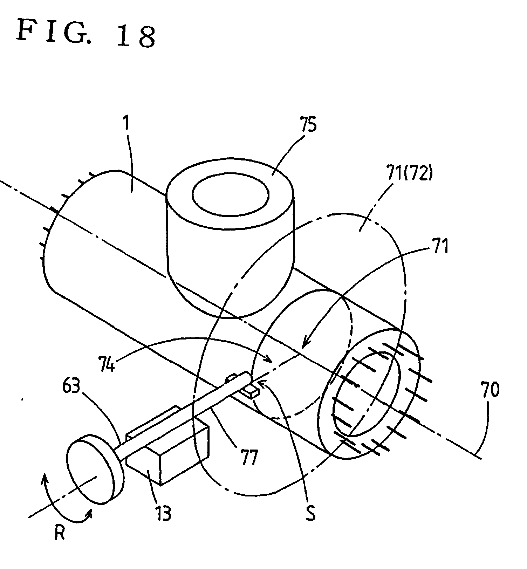

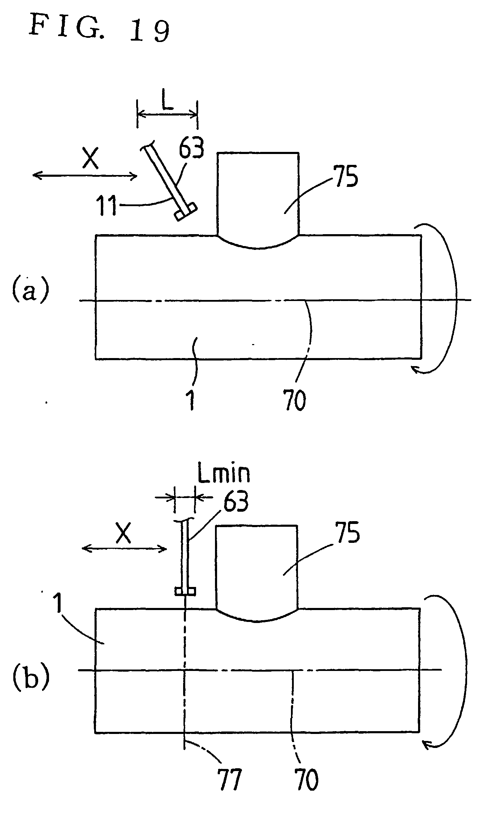

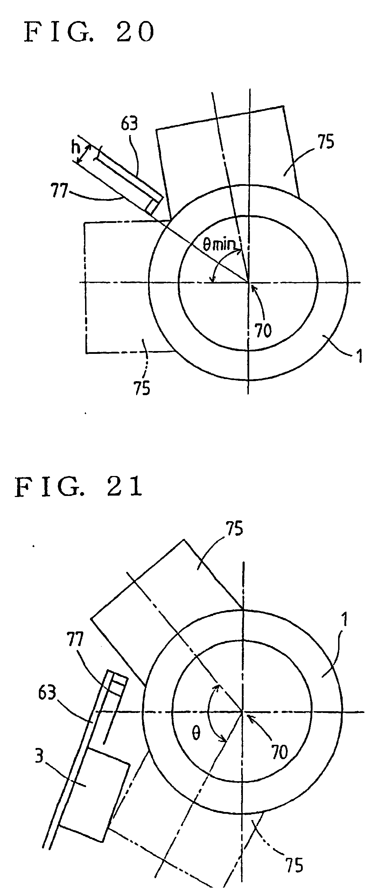

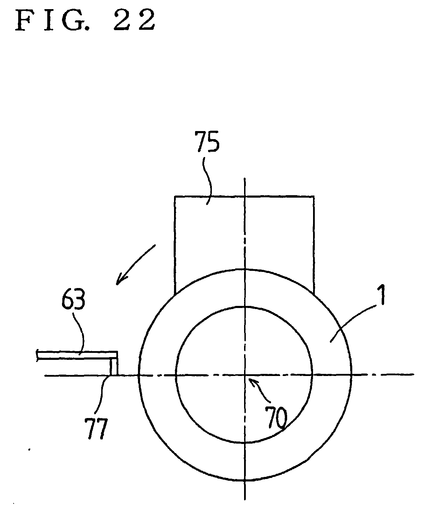

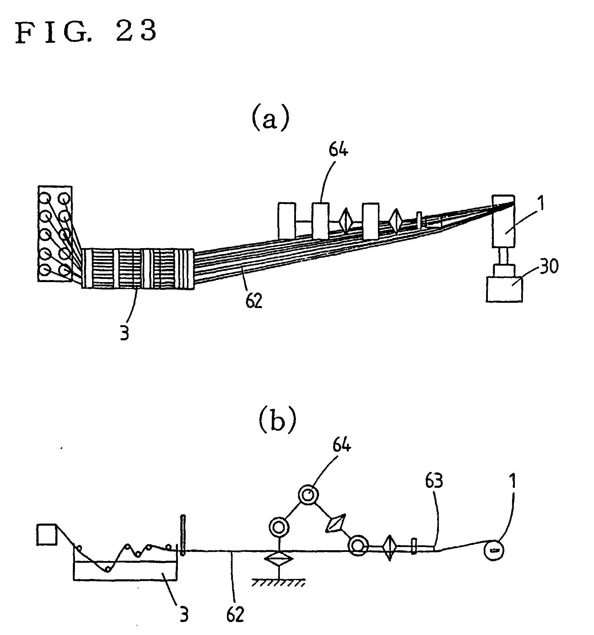

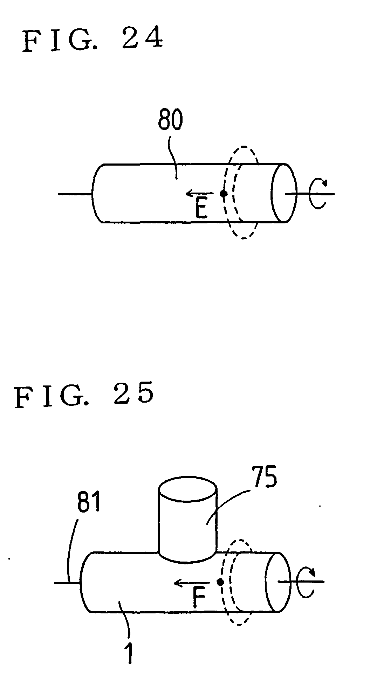

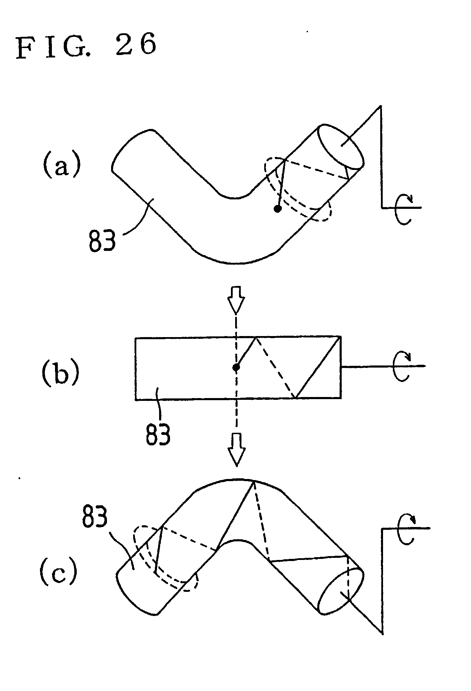

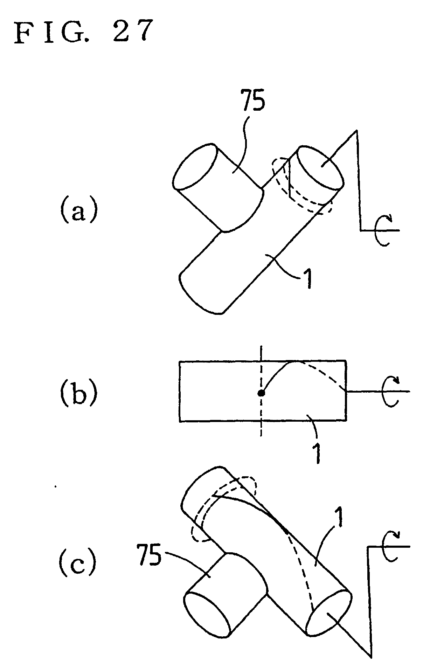

FIG. 15 through FIG. 27 are illustrations for describing the forming method of fiber-reinforced plastics products according to this invention corresponding to claims 10 to 14. FIG. 15 is a structural diagram of the forming equipment used in the forming method of fiber-reinforced plastics products related to one embodiment according to this invention corresponding to claims 10 to 14. FIG. 16 is a perspective view of a guide used in the forming method of fiber-reinforced plastics products related to one embodiment according to this invention corresponding to claims 10 to 14. FIG. 17 is a perspective view in section of the guide shown in FIG. 16. FIG. 18 is a perspective view showing a positional relation between the core die and the guide in the forming method of fiber-reinforced plastics products related to one embodiment according to this invention corresponding to claims 10 to 14. FIG. 19 is an illustration for explaining the conventional art and this invention in a form of embodiments, wherein FIG. 19(a) is a plan view showing a positional relation between the core die and the guide in the forming method of fiber-reinforced plastics products according to the conventional art and FIG. 19(b) is a plan view showing a positional relation between the core die and the guide in the forming method of fiber-reinforced plastics products according to the present invention. FIG. 20 is an illustration showing a positional relation in the rotating angle direction of the core die to the guide in the forming method of fiber-reinforced plastics products related to one embodiment according to the present invention corresponding to claims 10 to 14. FIG. 21 is an illustration showing a positional relation in the rotating angle direction of the core die to the guide in the forming method of fiber-reinforced plastics products related to another embodiment according to the present invention corresponding to claims 10 to 14. FIG. 22 is an illustration showing a positional relation in the rotating angle direction of the core die to the guide in the forming method of fiber-reinforced plastics products related to still another embodiment according to the present invention corresponding to claims 10 to 14. FIG. 23 shows the configuration of a forming equipment used in the forming method of fiber-reinforced plastics products related to yet another embodiment according to the present invention corresponding to claims 10 to 14, wherein FIG. 23(a) is a plan view of the same and FIG. 23(b) is a front view of the same. FIG. 24 is an illustration showing a guide locus when the present invention is applied to form straight pipes. FIG. 25 is an illustration showing a guide locus when the present invention is applied to form tees by rotating the core die around the main axis. FIG. 26 is an illustration showing a guide locus when the present invention is applied to form bends. FIG. 27 is an illustration showing a guide locus when the present invention is applied to form tees by rotating the core die tilted to the main axis and branch axis.

In the forming method of fiber-reinforced plastics products of the embodiment according to this invention, a rotating equipment 30, industrial robot 64, and guide member 63 as shown in FIG. 15 are used. And to the rotating equipment 30, the core die 1 is fixed, and a winding material 62 is wound around the core die 1 via the guide member 23 fixed to the industrial robot 64.

The rotating equipment 30 and the industrial robot 64 used for a moving equipment are the same as those used in the forming equipment described above. As shown in FIG. 16, the guide member 63 moved to an optimum position by this industrial robot 64 has an arm 22 installed to the fixing flange 21, and to the tip end side of this arm 22, a guide 25 is integrally fixed. At the intermediate portion of the arm 22, a resin impregnating bath 3 is installed. This resin impregnating bath 3 is fixed in the suspended form to the arm 22. The suspension of the resin impregnating bath 3 is carried out by interposing an elastic substance such as rubber, etc. or via a rotatable ring mounted to the arm 22. Consequently, the resin impregnating bath 3 can swing slightly with respect to the arm 22, and even if the arm 22 is tilted, the resin impregnating bath 3 can hold a nearly horizontal condition.

The inner construction of the resin impregnating bath 3 is shown in FIG. 17. This resin impregnating bath 3 has a roll core 16 and a retainer roll 17 mounted inside the box 15 nearly hermetically sealed to prevent leakage of resin. To this roll core 16, a winding material 62 is installed. In this embodiment, because of the need for housing a winding material 62 of a substantial length in a limited space, a strip with elasticity such as tricot, etc. is desirable for the winding material 62. However, glass cloth, glass mat, polyester, and other unwoven cloths, or other publicly known linear fibers or strip-form fibers may be used. The retainer roll 17 is fixed to the box 15.

On the side face on the guide 25 side of the box 15, a slit 19 is provided for pulling out the fiber. In the box 15, a thermosetting resin liquid (not illustrated) is contained, and part of the roll 18 is impregnated in this resin liquid. For this resin liquid, the type same as that used for the known FW method can be used, and for example, polyester resins, etc. are desirable.

The forming method according to this embodiment uses the equipment described above, in which with the core die 1 being rotated by the rotating equipment 30, the core die is moved by the industrial robot 64 in the vicinity of the guide member 63, and the winding material 62 is wound on the surface of the core die 1. As in the case of forming tees, where there is a possibility that the branch pipe with large rotating radius can collide with the guide member 63, the industrial robot 64 is moved to allow the guide member 63 to escape from the rotating region of the branch pipe portion, thereby avoiding collision of the guide member 63 with the branch pipe portion.

The forming method according to this embodiment is characterized in that the guide member 63 is arranged to satisfy specific posture conditions when the guide member 63 is moved along the core die 1. Another characteristics is that the target position of the guide member 63 is equipped with specific conditions when the guide member 63 is moved along the core die 1.

FIG. 18 shows the ideal positional relation of the guide member 63 to the core die 1 which satisfies both posture conditions and target position conditions of the guide member 63.

First, the posture conditions of the guide member 63 are described. In the forming method according to this embodiment, assume the plane 71 (plane which cuts the core die 1 in round slices) perpendicular to the center axis 70 of the core die 1 as shown in FIG. 18, and position the guide member 63 in this plane 71. The axial center 77 of the guide member 63 is directed to the center 73 in the plane 71 of the core die 1, and the axial center 77 of the guide member 63, which is the line of the winding material 62 engaged with the guide member 63, intersects the center 73. In addition, the axial center 77 of the guide member 63 is horizontal.

The target position conditions of the guide member 63 are shown as follows. The target position referred to here means the contact made between the surface of the core die 1 and the winding material 62.

In setting the target position condition, assume a plane 72 including the target position S and perpendicular to the center axis 70 of the core die 1. This plane 72 is the same as the previous plane 71 in this embodiment. The target position condition is to bring the straight line 74 connecting the target position S which lies in the plane 72 including the target position S and perpendicular to the center axis 70 of the core die 1, to the rotation center 73 of the core die, to be horizontal.

The distance between the target position S and the tip end of the guide member 63, which is the distance between the guide member 63 and the surface of the core die 1, should be as short as possible in order to enable the winding material 62 to be wound around the vicinity of the target position, and the specific distance between them is suitably about 10 mm to 50 mm.

When the distance between the guide member 63 and the surface of the core die 1 is about 10 mm to 50 mm, empirically speaking, fulfillment of the former posture conditions of the guide member 63 can satisfy the latter target position condition of the guide member 63.

The forming method according to this embodiment achieves an extremely easy operation for avoiding collision of the guide member 63 by setting the guide member 63 posture as specified above. The reasons are explained as follows.

In the case where the guide member 63 is positioned in the plane 71 perpendicular to the center axis 70 of the core die 1, the orthographic projection, as shown in FIG. 19(b), indicates that the axial center 77 of the guide member 63 is oriented at right angles with respect to the center axis 70. And the guide member 63 moves in the direction shown with arrow X of FIG. 19 (b), that is, parallel to the center axis 70, and carries out winding operation of the winding material 62 for the core die 1. And when the guide member 63 enters the rotating region of the branch pipe portion 75 and, in addition, the branch pipe portion 75 rotates to the rotation angle position where the guide member 63 exists, collision of both occurs. Therefore, to avoid the collision, the guide member 63 must escape from the rotating region of the branch pipe portion 75 before the branch pipe portion 75 comes to the rotation angle position of the guide member 63.

Now, in this forming method according to this embodiment, since the guide member 63 is located in the plane 71 perpendicular to the center axis 70 of the core die 1, and the axial center 77 of the guide member 63 is oriented at right angles with respect to the center axis 70, moving the guide member 63 in such a manner that the width "Lₘᵢₙ" of the guide member 63 clears out of the rotating region of the branch pipe portion 75 can avoid the collision between the guide member 63 and the branch pipe portion 75.

On the other hand, as in the case of the conventional art, where the winding material 62 is wound around the core die 1 with the guide, member 63 deviated from the plane 71 perpendicular to the center axis 70, as shown in FIG. 19(a), the guide member 63 must be moved in such a manner that the guide member clears out of the rotating region of the branch pipe portion 75 over a length "L" including the gradient of the arm 22.

For secondary effects when the guide member 63 is positioned within the plane 71 perpendicular to the center axis 70 of the core die 1, there is such an effect that the winding width of the winding material 62 can be markedly varied by rotating the guide member 63 is rotated in the direction of the arrow R in FIG. 18.

For the examples when the guide member 63 is positioned in the plane 71 perpendicular to the center axis 70 of the core die 1, there are cases in which the axial center 77 of the guide member 63 passes the rotation center of the core die 1 as shown in FIG. 20 and in which the axial center 77 of the guide member 63 is different from the rotation center of the core die 1 as shown in FIG. 21. The forming method according to this embodiment encompasses both cases and does not intend to negate either one, but as in the example of FIG. 20, it is desirable to have a construction in that the axial center 77 of the guide member 63 passes the rotation center of the core die 1.

That is, as shown in FIG. 20, when the axial center 77 of the guide member 63 passes the center of rotation of the core die 1, the guide member 63 is only required to evade for the period when the branch pipe portion achieves the rotation angle (θ min) equivalent to the height "h" of the guide member, whereas there arises a need to evade the guide member 63 as shown in FIG. 21.

In addition, as shown in FIG. 20, when the axial center 77 of the guide member 63 passes the center of rotation of the core die 1, there are advantages in that the location of the target position and the positional relation of the guide member 63 to the core die 1 are more easily grasped geometrically than when the axial center 77 of the guide member 63 is different from the rotation center of the core die 1 as shown in FIG. 21, and the operation program and teaching of the industrial robot 64 become easier.

When the guide member 63 integrally provided with the resin integrating tank 3 as adopted in this embodiment is used, tilting of the guide member 63 should be avoided as much as possible. From this viewpoint, the most desirable embodiment is the case in which the guide member 63 is located in the plane 71 perpendicular to the center axis 70 of the core die 1 as shown in FIG. 22, and the guide member 63 is in the horizontal posture, with the axial center 77 passing the center of rotation of the core die 1.

When the guide member 63 and the resin impregnating bath 3 are separately installed, the posture of the guide member 63 as shown in FIG. 22 is suitable from the viewpoint of preventing the bend of the winding material 62. That is, in the configuration in which the resin impregnating bath 3 is located at the position separate from the industrial robot 64, as shown in FIG. 23, it is possible to move the winding material 62 horizontally without bending the course of the winding material 62 by bringing the height of the exit of the resin impregnating bath 3 to be nearly equivalent to that of the guide member 63 as shown in FIG. 23(b), and in addition, by holding the guide member 63 in the horizontal posture.

Next discussion will be made on the traveling locus of the guide member 63 when the forming method according to this embodiment is applied.

In this forming method, the guide member 63 must be located in the plane 71 perpendicular to the center axis 70 of the core die 1, and the guide member 63 must be moved gradually in such a manner to hold this position in accord with the rotation of the core die 1.

For example, assuming the case in which the straight pipe such as a socket-and-spigot joint is formed, the core die 80 is rotated around the center axis of the core die 80 as a rotation axis as shown in FIG. 24. Consequently, the guide member 63 may be moved linearly as shown in arrow E of FIG. 24.

In the formation of tees, too, the guide member 63 is moved linearly as shown in arrow F of FIG. 25, where the core die 1 is rotated around a main pipe axis 81 as a rotation axis as shown in FIG. 25.

As against this, when a bent pipe is formed and the core die 33 is rotated with the straight line portion of the core die 83 set as a rotation axis as shown in FIG. 26, a three-dimensional motion synthesizing the whirling and the traveling in the axial direction is required in accord with the whirling of the core die 83.

This is the same in the formation of tees where the tees are formed by rotating the core die tilted with respect to the main axis and branch axis as shown in FIG. 27. The guide member 63 requires a three-dimensional motion synthesizing the whirling and the traveling in the axial direction.

When the three-dimensional motion is required for the guide member 63 as in the case of forming bent pipes or forming tees while rotating the T-letter core die tilted with respect to the main axis and branch axis, it is sometimes difficult to hold the guide member 63 constantly in an ideal posture, that is, to hold the guide member in such a posture as to position the guide member 63 in the plane 71 perpendicular to the center axis 70 of the core die 1, to direct the axial center 71 of the guide member 63 to the center 73 in the plane 71 of the core die 1, and to allow the axial center 77 of the guide member 63 to intersect the center 73. And it is difficult to teach the industrial robot 64 to hold the guide member 63 constantly in an ideal posture.

Therefore, in such case, the industrial robot 64 is taught in such a manner that the target position of the guide member 63 satisfies the above-mentioned conditions. That is, the industrial robot 64 is taught in such a manner that the straight line 74 connecting the target position S which lies in the plane 72 including the target position S and perpendicular to the center axis 70 of the core die 1, to the rotation center 73 of the core die 1, becomes horizontal.

As a result, the posture of the guide member 63 does not always achieve an ideal condition but in almost all work process, the condition in that the guide member 63 is located in a plane 71 (plane which cuts the core die 1 in round slices) perpendicular to the center axis 70 of the core die 1 is satisfied. Consequently, it becomes extremely easy to avoid collision of the guide member 63 by simple teaching.

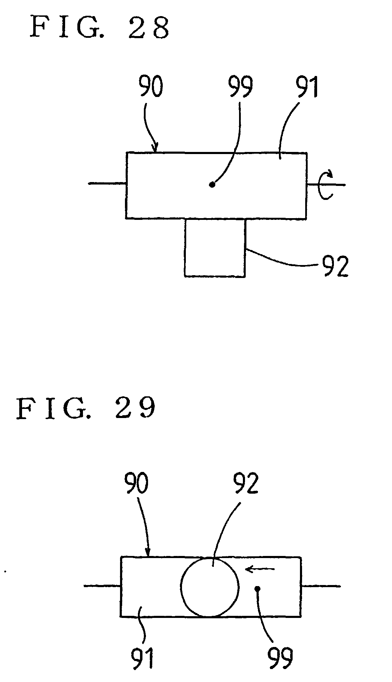

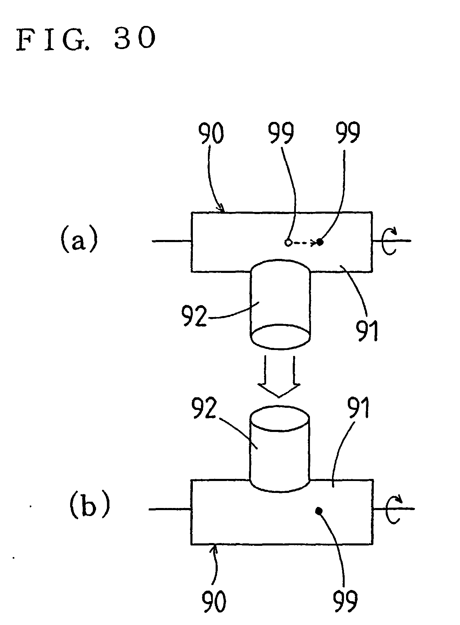

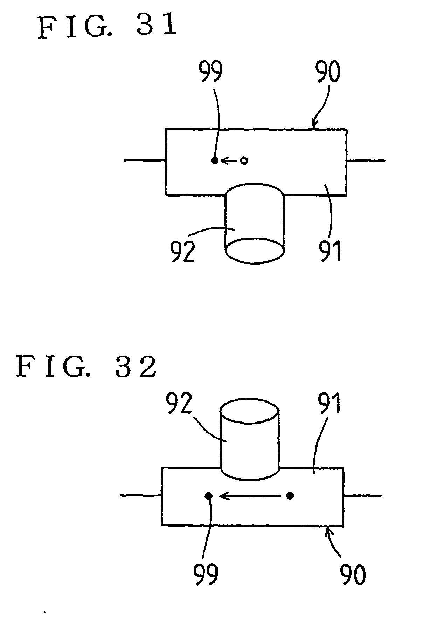

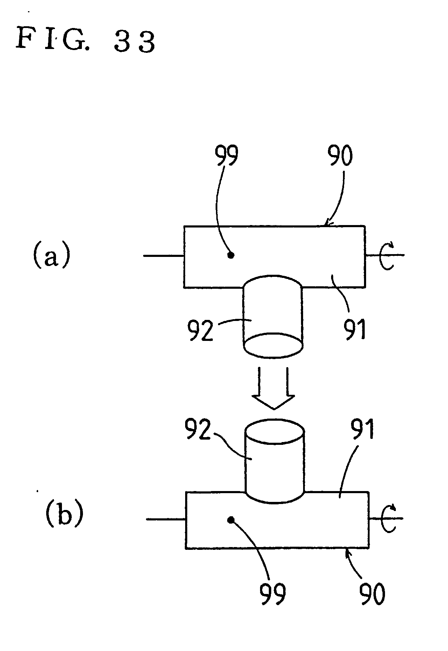

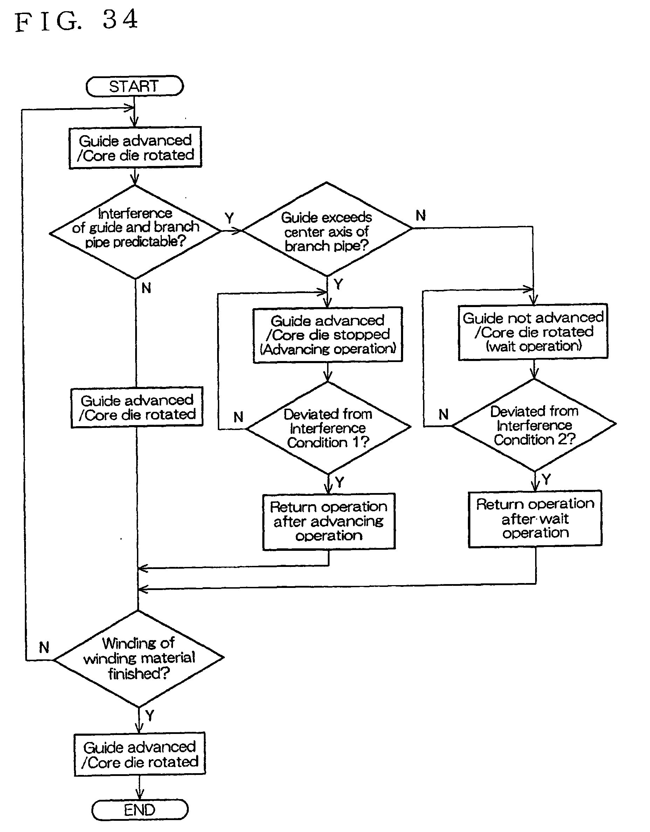

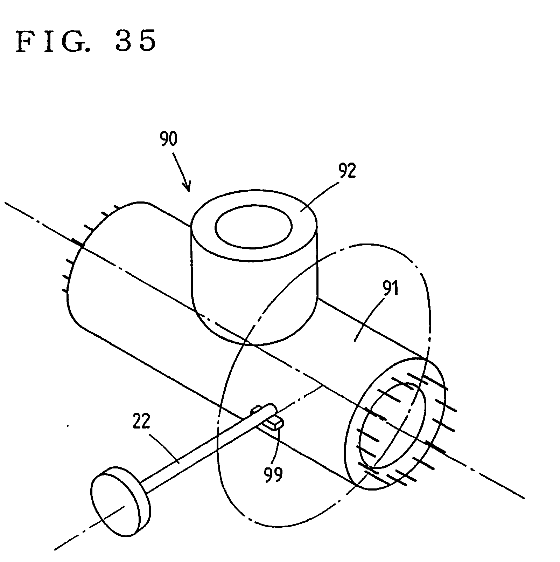

FIG. 28 to FIG. 35 explain a forming method of fiber-reinforced plastics products related to the embodiment according to this invention corresponding to claims 15 and 16. FIG. 28 is an illustration explaining a forming method of fiber-reinforced plastics products related to the embodiment and is a front view when the guide stops and the T-letter form object continues rotating. FIG. 29 is an illustration for explaining a forming method of fiber-reinforced plastics products related to the embodiment and is a front view when the T-letter form object stops rotating and the guide continues moving. FIG. 30 is an illustration for explaining a forming method of fiber-reinforced plastics products related to the embodiment and is a front view showing the wait operation wherein the guide is not allowed to advance and the T-letter form object is rotated, which operation takes place when the branch pipe is predicted to interfere with the guide if the T-letter form object continues to rotate and the guide continues to advance. FIG. 31 is an illustration for explaining a forming method of fiber-reinforced plastics products related to the embodiment and is a front view showing the advancing operation wherein the T-letter form object stops rotation and the guide is allowed to advance. FIG. 32 is an illustration for explaining a forming method of fiber-reinforced plastics products related to the embodiment and is a front view showing the operation of advancing the guide, after the wait operation, to an expected position where it would be located if the wait operation had not been carried out. FIG. 33 is an illustration for explaining a forming method of fiber-reinforced plastics products related to the embodiment and is a front view showing the operation of rotating the T-letter form object, after the advancing operation, to an expected rotation angle to which it would have rotated if the advancing operation had not been carried out. FIG. 34 is a flow chart describing a method for winding the winding material around the T-letter form object related to the embodiment. FIG. 35 is an illustration for explaining a forming method of fiber-reinforced plastics products related to the embodiment and is a perspective view showing the condition in which the guide is mounted to the arm.

This embodiment shows a method for winding a winding material to a T-letter form object.

The main pipe 91 of a T-letter form object 90 is rotated around the center axis, and the guide 99 for guiding a linear or strip winding material comes close to the main pipe 91 to make a reciprocating motion; and the winding material can be wound around the main pipe 91 at a desired position. For example, if the diameter of the main pipe 91 is 800 mm, the guide 99 is designed to approach the main pipe up to 30 mm. However, if the guide 99 comes close to the main pipe 91 to make a reciprocating motion, the rotation of the main pipe 91 may cause interference between the revolving branch pipe 92 and the guide 99.

Now, three conditions are assumed for the interference form. First, "Interference Condition 1" is a condition in which the guide 99 interferes with the branch pipe 92 when the guide 99 stops and the core die 90 continues to rotate, as shown in FIG. 28. Next, "Interference Condition 2" is a condition in which the guide 99 interferes with the branch pipe 92 when the core die 90 stops and the guide 99 continues to travel, as shown in FIG. 29. And third, "Interference Condition 3" is a condition in which the guide 99 interferes with the branch pipe 92 when the core die 90 continues to rotate and the guide 99 continues to travel, as shown in FIG. 30(a). "Interference Condition 3" is the condition in which the guide 99 inevitably interferes with the branch pipe 92, and it is the position where both "Interference Condition 1" and "Interference Condition 2" are satisfied. Conversely, when either "Interference Condition 1" or "Interference Condition 2" is not satisfied, "Interference Condition 3" is not achieved, and the guide 99 does not interfere with the branch pipe 92.

The core die 90 rotates and the guide 99 moves along the vicinity of the main pipe 91 in order to wind the winding material around the main pipe 91 of the core die 90, but since the rotating position of the core die 90 and the traveling position of the guide 99 are known, it is possible to predict that the condition corresponds to the Interference Condition 3 as shown in FIG. 30(a). If it is predicted that the condition in which the core die 90 rotates and the guide 99 moves corresponds to the Interference Condition 3, the operation moves to the wait operation or advancing operation. The wait operation is an operation, as shown in FIG. 30(b), of stopping or reversing the guide 99 (not allowed to advance) and rotating the core die 90 until it clears out of the Interference Condition 2. Specifically, when this embodiment is utilized for a winding method utilizing the feedback control, the approach of the branch pipe 92 to the guide 99 is detected by a sensor and the guide 99 is stopped or reversed. When this embodiment is utilized for the winding method by the motion based on teaching, stopping at the position or reversing position is taught to the moving equipment. Whether to teach the stopping position or the reversing position should be suitably selected in accord with the condition, but it is generally desirable to teach the stopping position. This is because if the reversing position is taught and the guide is excessively reversed, the winding material finished with winding slides on the core die and may scrape off the resin.

The advancing operation is an operation of stopping rotation of the core die 90 and advancing the guide 99 until it clears out of the Interference Condition 1 as shown in FIG. 31. Specifically, when this embodiment is utilized for a winding method utilizing the feedback control, the approach of the branch pipe 92 to the guide 99 is detected by a sensor and rotation of the core die 90 only is stopped. When this embodiment is utilized for the winding method by the motion based on teaching, the guide 99 teaches the extension position of the travel locus up to now, and allows the rotating means to store in memory a temporary stop.

The move to the wait operation or the advancing operation, should be judged whether the guide 99 exceeds the specified position of the branch pipe 92. For the specified position which is a boundary between the wait operation and the advancing operation, the center axis of the branch pipe is generally suitable, but with the danger, etc. to scrape off the resin as described above taken into account, it is preferable to give priority to the advancing operation as much as possible, and it is desirable to designate the position considerably exceeding the center axis as a specified position from this point of view.

In this embodiment, following a general example, the guide 99 moves to a wait operation if the guide 99 position does not exceed the center axis of the branch pipe 92 as shown in FIG. 30. Specifically, when this embodiment is utilized to the winding method utilizing the feedback control, the relative position of the guide 99 and the branch pipe 92 is detected using coordinates, etc., so as to determine whether the position of the guide 99 exceeds the center axis of the branch pipe 92 or not.

When this embodiment is utilized to the winding method utilizing the motion based on the teaching, whether the position of the guide 99 exceeds the center axis of the branch pipe 92 or not should be determined visually or by other method, and stopping of the moving equipment should be taught or the temporary stop of the rotating equipment should be stored in memory.

If the guide 99 position exceeds the center axis of the branch pipe 92 as shown in FIG. 31, the advancing operation takes place. In this way, the winding material can be wound around the main pipe 91 without allowing the guide 99 to interfere with the branch pipe 92. The above motion can be expressed in the flow chart shown in FIG. 34.

After the wait operation or the advancing operation, it is possible to resume the operation of winding the winding material around the main pipe 91 by continuously advancing the guide 99 or rotating the core die 90. However, after the wait operation, the guide 99 is advanced to the position where it would be located if the rotation of the core die 90 had stopped and the guide 99 had advanced without a stop as shown in FIG. 32. After the advancing operation, the core die 90 is rotated to the rotation angle predicted if the advance of the guide 99 had stopped and the core die 90 had rotated without a stop as shown in FIG. 33, and if necessary, the guide 99 is reversed. By doing so, the winding material is able to be wound around the main pipe 91 as if the wait operation or advancing operation had not taken place, and it is possible to wind the winding material in the route originally planned.

In the above embodiment, the guide 99 and the core die 90 advance and rotate independently and the guide 99 or core die 90 is stopped by predicting the Interference Conditions 1, 2, and 3. However, since the traveling position of the guide 99 and the rotation position of the core die 90 are known, it is possible to apply a method for simulating timing to fall into the Interference Condition 3 and predicted motion using computer graphics at the time of start when the core die 90 is rotated and the guide 99 is moved. Consequently, it is possible to generate a program to stop advancement of the guide 99 or rotation of the core die 90 in the timing to cause the Interference Condition 3. It is also possible to apply a program based on the numerical control in which the timing to fall into the Interference Condition 3 is computed by geometrical computations in the program without using this kind of simulation.

The guide 99 is mounted to the tip end portion of the bar-form arm 22 as shown in FIG. 35. If this arm 22 is tilted to the side face of the main pipe 91, even if the guide 99 is not located at the position which does not interfere with the branch pipe 92, the other end portion of the arm 22 interferes with the branch pipe 92. Consequently, the arm 22 brings the guide 99 closer to the core die 90 so that it forms right angles to the side face of the main pipe 91, and allows the guide 99 to move in the direction parallel to the branch pipe 92.

In the winding method for T-letter form object as described above, the rotating equipment can be optional, and this can be applicable when the main pipe is used for a rotating axis, when the branch pipe is used for a rotating axis, or when the axis with a specified angle from both the main pipe and the branch pipe is used for a rotating axis. Above all, the winding method using the axis with a specified angle from both the main pipe and the branch pipe used as a rotating axis allows the winding material to be wound around the main pipe and the branch pipe without replacing the rotating axis, and the operation is complicated, and from the viewpoint of preventing trouble of the guide interfering with the branch pipe, this embodiment is preferable. However, the winding method using the axis with a specified angle from both the main pipe and the branch pipe used as a rotating axis results in three-dimensional guide action, and the explanation becomes complicated. Therefore, in this embodiment, explanation is made in regard to the simplest case in which the main pipe is used for a rotating axis. When it is applied to the winding method using the axis with a specified angle from both the main pipe and the branch pipe as a rotating axis, the whirling motion arising from using the eccentric shaft for the rotating axis of T-letter form object is composed with respect to the relative motion of T-letter form object with the guide.

## Claims

1. A forming equipment of fiber-reinforced plastics products comprising a rotating equipment for rotating a core die, a moving equipment provided with a guide for traveling in the vicinity of the core die and guiding a fiber, a resin impregnating bath for impregnating the fiber continuously in a liquid resin, and a fiber feeder for supplying the fiber pulled out from the resin impregnating bath to the guide, said forming equipment of fiber-reinforced plastics products winding the fiber supplied to the guide around the core die, wherein the moving equipment is provided with two or more guides, of which only the guide closest to the core die is fixed and the other guide or guides are rotatably mounted to the moving equipment.

2. A forming equipment of fiber-reinforced plastics products according to claim 1 wherein the guide located closest to the fiber feeder is rotatably mounted to the moving equipment with two or more degrees of freedom.

3. A forming equipment of fiber-reinforced plastics products according to claim 1 wherein the guide is fixed to an arm which is located in the vicinity of the core die and at least movable in the axial direction of the core die, and a cover for covering the top end of the arm is provided between the arm and the guide.

4. A forming equipment of fiber-reinforced plastics products according to claim 3 wherein the form of the cover is semi-spherical.

5. A forming equipment of fiber-reinforced plastics products comprising a rotating equipment for rotating a core die, a moving equipment provided with a guide for traveling in the vicinity of the core die and guiding a fiber, a resin impregnating bath for impregnating the fiber continuously in a liquid resin, and a fiber feeder for supplying the fiber pulled out from the resin impregnating bath to the guide, said forming equipment of fiber-reinforced plastics products winding the fiber supplied to the guide around the core die, wherein a slider being formed with a through-hole and vertically movable is installed between the resin impregnating bath and the guide, and the fiber pulled out from the resin impregnating bath is biased downward by the gravity of the slider with the fiber passing through the through-hole.

6. A forming equipment of fiber-reinforced plastics products according to claim 5 wherein the through-hole is an elongated hole extended in a horizontal direction.

7. A forming equipment of fiber-reinforced plastics products according to claim 5 wherein a plurality of sliders are installed between the resin impregnating bath and the guide and a piece of fiber is passed through the through-hole of each slider.

8. A forming equipment of fiber-reinforced plastics products according to any of claims 5, 6 and 7 wherein shafts for applying tension to the fiber are provided on the fiber introducing side of the resin impregnating bath.

9. A forming equipment of fiber-reinforced plastics products comprising a rotating equipment for rotating a core die, a moving equipment provided with a guide for traveling in the vicinity of the core die and guiding a fiber, a resin impregnating bath for impregnating the fiber continuously in a liquid resin, and a fiber feeder for supplying the fiber pulled out from the resin impregnating bath to the guide, said forming equipment of fiber-reinforced plastics products winding the fiber supplied to the guide around the core die, wherein shafts for applying tension to the fiber are provided on the fiber introducing side of the resin impregnating bath.

10. A forming method of fiber-reinforced plastics products comprising the step of winding a linear or strip-form winding material around a core die via a guide equipped to a moving equipment moving in the vicinity of the core die, with the core die rotated, wherein the winding material is wound under such a condition that the guide is positioned on a plane perpendicular to the center axis of the core die.

11. A forming method of fiber-reinforced plastics products according to claim 10 wherein the axial center of the guide is directed to the center of the core die.

12. A forming method of fiber-reinforced plastics products according to claim 11 wherein the axial center of the guide is horizontal.

13. A forming method of fiber-reinforced plastics products according to any of claims 10, 11 and 13 wherein a resin impregnating bath for impregnating resin to the winding material is equipped into the guide and the winding material coming out from the resin impregnating bath is wound around the core die via the guide.

14. A forming method of fiber-reinforced plastics products comprising the step of winding a linear or strip-form winding material around a core die via a guide, with the core die rotated, wherein a target position which is a contact between a surface of the core die and the winding material is positioned where a straight line connecting the target position which lies in a plane including the target position and perpendicular to the center axis of the core die, to the rotation center of the core die, is horizontal.

15. A forming method of fiber-reinforced plastics products using a T-letter form object composed of a main pipe and a branch pipe as a core die and comprising the step of winding a winding material around the T-letter form object via a guide moving in the vicinity of the T-letter form object, with the T-letter form object rotated, wherein, if it is forecasted that the branch pipe of the T-letter form object may interfere with the guide when the T-letter form object continues to rotate and the guide continues to travel, await operation in which the guide is not allowed to advance and the T-letter form object is held rotated, or an advancing operation in which the rotation of the T-letter form object is stopped and the guide is allowed to advance is selectively carried out, and thereafter, when the branch pipe no longer interferes with the guide, an advancing operation of the guide or a rotating operation of the T-letter form object is carried out.

16. A forming method of fiber-reinforced plastics products wherein, after the wait operation according to claim 15, the guide is allowed to return to a position where the guide is assumed to locate if the T-letter form object had stopped its rotation and the guide had continued to advance, or, after the advancing operation according to claim 15, the T-letter form object is allowed to rotate at a position where the T-letter form object is assumed to locate if the guide had stopped and the T-letter form object had continued to rotate.
